(19) Europäisches Patentamt
European Patent Office
Office européen des brevets

(11) **EP 3 926 427 A1**

(12) **EUROPEAN PATENT APPLICATION**
published in accordance with Art. 153(4) EPC

(43) Date of publication:
**22.12.2021 Bulletin 2021/51**

(51) Int Cl.:
***G05B 19/418*** *(2006.01)*          ***G06Q 50/04*** *(2012.01)*

(21) Application number: **20756435.2**

(22) Date of filing: **09.01.2020**

(86) International application number:
**PCT/JP2020/000450**

(87) International publication number:
**WO 2020/166236 (20.08.2020 Gazette 2020/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2019 JP 2019023823**

(71) Applicant: **Panasonic Intellectual Property Management Co., Ltd.**
**Osaka-shi, Osaka 540-6207 (JP)**

(72) Inventors:
• **OKIMOTO, Yoshiyuki**
  **Chuo-ku, Osaka-shi, Osaka 540-6207 (JP)**
• **ICHIMURA, Daijiroh**
  **Chuo-ku, Osaka-shi, Osaka 540-6207 (JP)**
• **SHIN, Hidehiko**
  **Chuo-ku, Osaka-shi, Osaka 540-6207 (JP)**

(74) Representative: **Eisenführ Speiser**
**Patentanwälte Rechtsanwälte PartGmbB**
**Postfach 10 60 78**
**28060 Bremen (DE)**

(54) **WORK EFFICIENCY EVALUATING METHOD, WORK EFFICIENCY EVALUATING DEVICE, AND PROGRAM**

(57)     A method evaluating a decrease in production performance for a target work. A work efficiency evaluation method includes the steps of: reading, from a storage unit (13), model data used for evaluating work efficiency and generated based on operation data related to work including a predetermined work time and a predetermined work amount; calculating an degree of impact of a decrease in work efficiency on the basis of data related to time required for work and a work amount by the model data; and evaluating a decrease in production performance in accordance with the degree of impact.

FIG.4

**Description**

TECHNICAL FIELD

The present disclosure relates to a work efficiency evaluation method, a work efficiency evaluation apparatus, and a program.

BACKGROUND ART

Patent Document 1 discloses that a sign or a cause of an abnormality is estimated when an abnormality sign of a target device is detected or when an abnormality occurs. The apparatus abnormality diagnosis method disclosed in Patent Document 1 generates a correlation between maintenance work and at least one of an operation event or an alarm related to the maintenance work as a correlation model, and performs abnormality diagnosis processing using the correlation model.

PRIOR ART DOCUMENT

PATENT DOCUMENT

Patent Document 1: Japanese Patent No. 5129725

SUMMARY OF INVENTION

PROBLEM TO BE SOLVED

The present disclosure provides a work efficiency evaluation method, a work efficiency evaluation apparatus, and a program of evaluating efficiency of work by a machine or a person, such as manufacturing, repairing, and sorting of products.

MEANS FOR SOLVING PROBLEM

A work efficiency evaluation method of the present disclosure includes steps of: reading, from a storage unit, model data used for evaluating work efficiency and generated based on operation data related to work including a predetermined work time and a predetermined work amount; calculating a degree of impact of a decrease in work efficiency on the basis of data related to time required for work and a work amount by the model data; and evaluating the decrease in the work efficiency in accordance with the degree of impact.

These general and specific aspects may be implemented by a system, a method, and a computer program, and a combination thereof.

EFFECTS OF INVENTION

The work efficiency evaluation method, the work efficiency evaluation apparatus, and the program of the present disclosure can evaluate a decrease in the work efficiency.

BRIEF DESCRIPTION OF DRAWINGS

[Fig. 1] Fig. 1 is a block diagram illustrating a configuration of a production performance evaluation apparatus according to an embodiment.
[Fig.2A] Fig. 2A is a table for describing a part of log data used in the production performance evaluation apparatus.
[Fig.2B] Fig. 2B is a table subsequent to Fig. 2A, illustrating a part of the log data used in the production performance evaluation apparatus.
[Fig.3A] Fig. 3A is a table illustrating values obtained from the log data in the production performance evaluation apparatus.
[Fig.3B] Fig. 3B is a table subsequent to Fig. 3A, illustrating values obtained from the log data in the production performance evaluation apparatus.
[Fig. 4] Fig. 4 is a diagram illustrating a relationship of an ideal takt time model, a brief stop time model, a defect manufacturing time model, and an effective takt time model.

[Fig.5A] Fig. 5A is a graph illustrating a probability obtained by point estimation.

[Fig.5B] Fig. 5B is a graph illustrating a probability distribution obtained by Bayesian inference.

[Fig.6A] Fig. 6A is a graph illustrating a probability distribution obtained by maximum likelihood estimation.

[Fig.6B] Fig. 6B is a graph illustrating a probability distribution obtained by the Bayesian inference, as compared with Fig. 6A.

[Fig.7A] Fig. 7A is a graph illustrating an example of logarithmic exponential distribution.

[Fig.7B] Fig. 7B is a graph illustrating an example of zero inflated exponential distribution.

[Fig.7C] Fig. 7C is a graph illustrating an example of an exponential distribution.

[Fig.8A] Fig. 8A is an example of model data generated by the performance evaluation apparatus illustrated in Fig. 1.

[Fig.8B] Fig. 8B is a distribution obtained from the model data in Fig. 8A.

[Fig. 9] Fig. 9 is an example of a probability distribution of the effective takt time.

[Fig. 10A] Fig. 10A is an example of the effective takt time estimated in a case where an ideal takt time and an error time are not used.

[Fig. 10B] Fig. 10B is an example of the effective takt time estimated using the ideal takt time.

[Fig. 10C] Fig. 10C is an example of the effective takt time estimated using the error time.

[Fig. 11A] Fig. 11A is an example of each obtained information amount.

[Fig. 11B] Fig. 11B is a diagram illustrating evaluation of a cause of performance deterioration from the information amount in Fig. 11A.

[Fig. 12A] Fig. 12A is a flowchart illustrating a production performance evaluation method.

[Fig. 12B] Fig. 12B is a flowchart subsequent to Fig. 12A, illustrating the production performance evaluation method.

DETAILED DESCRIPTION

[Knowledge as basis of present disclosure]

As one index of production performance of a factory, time per production called takt time is used. In some cases, one production facility is used to produce, at different timings, a plurality of types of products requiring different times for production. That is, unless the manufactured product is considered, it may not be appropriate to evaluate the production performance by the takt time.

Further, in a production facility, the operation of the facility is stopped (hereinafter, described as "brief stop") for various reasons, and this may cause a decrease in the production quantity. Each facility has a significantly large number (for example, 250 types) of errors that cause a brief stop, and even if the facility can be specified in which the production performance is deteriorated, the cause of the deterioration varies. Further, if the cause of the deterioration in the production performance cannot be identified, the production performance cannot be improved, and thus the identification of the cause may be desired.

Furthermore, in a case where an error that frequently occurs has occurred at a usual frequency and in a case where an error that rarely occurs has occurred several times, it is difficult to simply determine which case has strongly affected the deterioration in the production performance only from the time and the number of errors.

In addition, it is considered that a "yield" generated in the production of products also affects the deterioration of the production performance of the products. However, the yield is a number ratio of the number of non-defectives to the number of products, and it is therefore difficult to simply compare the yield with the time for a brief stop or the like.

In addition to the production of products, a decrease in efficiency of various works by a machine or a person may be evaluated, but it is difficult to identify occurrence of a decrease in the efficiency or a cause of the decrease in efficiency.

The present disclosure provides a work efficiency evaluation method, a work efficiency evaluation apparatus, and a program used for evaluation of work efficiency. In the following embodiment, the production of products is taken as an example of the work efficiency, and a production performance evaluation method, a production performance evaluation apparatus, and a program for evaluating deterioration in production performance of the products will be described. Specifically, a takt time according to work content such as a type of manufacturing components is estimated, and a decrease in work efficiency is evaluated by comparing the takt time with the work time and the work amount of the performed work. In consideration of the work stop time due to an error and a loss time related to the production of a defective, a cause of a decrease in work efficiency is estimated on the basis of which cause can explain the decrease from the estimated takt time. For example, the production performance evaluation method, the production performance evaluation apparatus, and the program of the present disclosure can find and solve a problem of a facility at an early stage in a factory that produces products. As a result, in a factory using the production performance evaluation method, the production performance evaluation apparatus, and the program of the present disclosure, improvement in production performance of products can be achieved.

Note that examples of the "work" that is a target of an efficiency evaluation method by the work efficiency evaluation method, the work efficiency evaluation apparatus, and the program of the present disclosure include various works such as work efficiency in repairing an article, work efficiency in inspecting an article, work efficiency in packing an article, and work efficiency in selecting an article in addition to production efficiency relating to production of products. Further, the work as a target of the work efficiency evaluation method, the work efficiency evaluation apparatus, and the program is not limited to work performed by a machine, and may be work performed by a jig or work performed by a person.

[Embodiment]

A production performance evaluation apparatus and a production performance evaluation method according to an embodiment evaluate performance of a machine used for production in a factory that produces products. Here, the production performance evaluation apparatus is connected to a machine to be evaluated in a wired or wireless communication. Then, the production performance evaluation apparatus acquires log data such as a parameter used for operation of the connected machine, a measurement value (observation value) of the machine, a parameter specifying a structure of the product to be produced, time required for the production of the products, and the number of non-defectives and the number of defectives which are the number of non-defectives and the number of defectives of the manufactured products, and evaluates the performance of the machine using the acquired log data. Hereinafter, the production performance evaluation apparatus, the production performance evaluation method, and a program according to the embodiment will be described with reference to the drawings.

In the present application, "takt time" refers to time required to produce one product.

A "brief stop" means that a machine used for production of products is stopped for a short time (for example, about 1 to 30 minutes) due to some error in the production of the products. In addition, a "brief stop time" means time from when an error occurs and the machine stops for a certain time to when the machine is restored by an operator or the like and restarted.

A "lot" means a production unit of a plurality of products collectively produced under the same conditions when products are produced. In the following description, it is assumed that information related to production is attached to each lot.

A "yield" is a ratio of the number of non-defectives actually produced to a production amount of the products expected from an input amount of a raw material in the production of the products.

In the present application, the terms "production" and "manufacturing" are used as synonymous.

<Production performance evaluation apparatus>

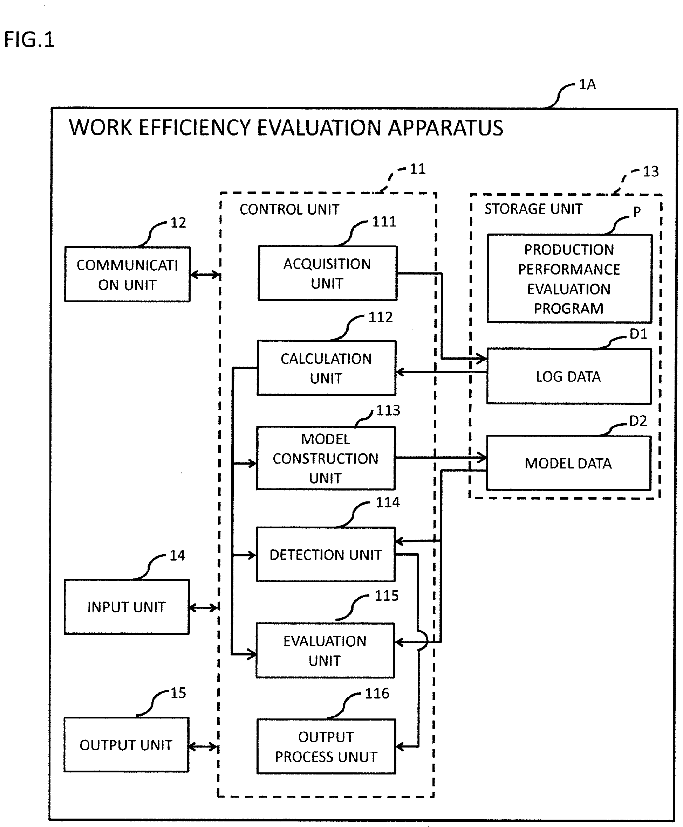

As illustrated in Fig. 1, a production performance evaluation apparatus 1A includes an acquisition unit 111, a calculation unit 112, a model construction unit 113, a detection unit 114, an evaluation unit 115, and an output process unit 116. The production performance evaluation apparatus 1A is a computer including a control unit 11 such as a CPU that processes data, a communication unit 12 that transmits and receives data with an external device or the like via a network, a storage unit 13 such as a RAM or a ROM that stores data, an input unit 14 used for inputting data, and an output unit 15 used for outputting data. Further, the storage unit 13 stores a production performance evaluation program P, log data D1, and model data D2.

For example, in the production performance evaluation apparatus 1A, the production performance evaluation program P stored in the storage unit 13 is read and executed, and thus the control unit 11 performs processing as the acquisition unit 111, the calculation unit 112, the model construction unit 113, the detection unit 114, the evaluation unit 115, and the output process unit 116.

Here, the production performance evaluation apparatus 1A may be realized by one computer or may be realized by a combination of a plurality of computers connected via a network. For example, a part of the data stored in the storage unit 13 may be stored in an external storage medium connected via a network, and the production performance evaluation apparatus 1A may be configured to use the data stored in the external storage medium. Specifically, the log data D1 and the model data D2 used in processing to be described later may be stored in the external storage medium. Further, the acquisition unit 111 may be realized by an external device.

The acquisition unit 111 acquires, at a predetermined timing, log data related to production, such as a parameter for specifying a production condition of a machine, time required for production of a product, and information on the number of non-defectives and defectives of the produced products, from the machine to be evaluated for the production performance, and accumulates and stores the log data in the storage unit 13. For example, the acquisition unit 111 may acquire the log data at a periodic timing, may acquire the log data at a timing when a value of the parameter changes, or may acquire the log data at all times while the machine is used.

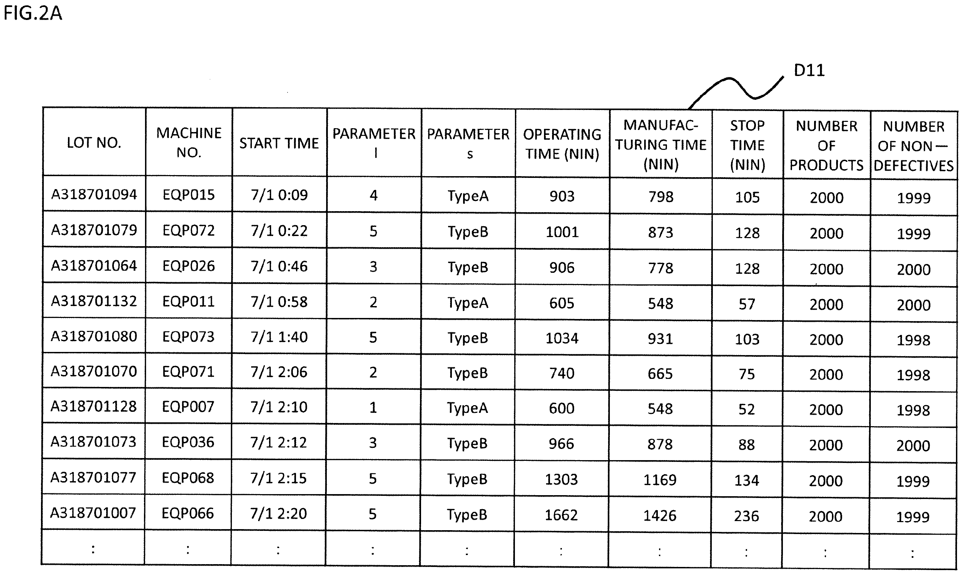

Fig. 2A illustrates an example of lot information D11 as a part of the log data D1. The lot information D11 is data related to the time of operation or stop of the machine at the time of production of the products, the number of non-defectives and defectives of the produced products, and the like. Specifically, the lot information D11 is data that associates a "lot number " that is identification information of a lot of the products to be produced, a "machine number " that is identification information of a machine used for production of the products, a "start time" that is a time when the production is started in this lot, a "parameter 1 " and a "parameter s " that are values of manufacturing parameters of the product produced in this lot, an "operating time" that is a time required for production of the products in this lot, a "manufacturing time" that is a time obtained by excluding a time when the machine is actually stopped in the operating time, a "stop time" that is a time when the machine is stopped in the operating time, a "number of products" that is the number of products produced in this lot, and a "number of non-defectives" that is the number of non-defectives among products generated with this lot number.

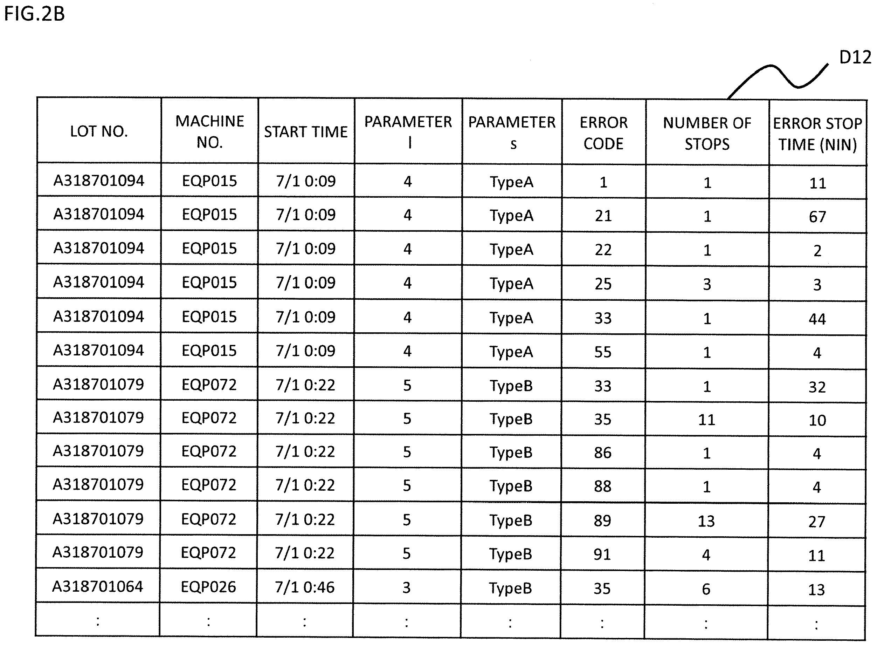

Fig. 2B illustrates an example of brief stop information D12 as a part of the log data D1. The brief stop information D12 is data related to a so-called brief stop at the time of production of products, and includes information such as the number of stops which is the number of times of occurrence of the brief stop in a certain lot and a stop time which is the time of the brief stop. Specifically, the brief stop information D12 includes a "lot number", a "machine number" which is identification information of the machine used to produce the products, "start time" which is time when the production of the products of this lot number is started, a "parameter 1", a "parameter s", an "error code" which is identification information of an error generated when the products are produced with this lot number, the "number of stops" which is a total number of the brief stops generated by the error of this error code, and "error stop time" which is a total of the total stop time of the brief stops generated by the error of this error code.

A plurality of types of errors may occur in generation with one lot number, the brief stop information D12 illustrated in Fig. 2B has a plurality of records for one lot number. Specifically, it can be seen from the brief stop information D12 in Fig. 2B that, in the generation of a lot number "A318701094", an error of an error code "1" occurs once, an error of "21" occurs once, an error of "22" occurs once, an error of "25" occurs three times, an error of "33" occurs once, and an error of "55" occurs once.

Note that a data configuration illustrated in Figs. 2A and 2B is an example, and the configuration is not limited as long as the log data D1 includes data of each item necessary for evaluation of production performance in the production performance evaluation apparatus 1A.

Using the log data D1, the calculation unit 112 calculates an effective takt time $t_1$, an ideal takt time $t_0$, an error time $t_E$, a brief stop time fi per product for each error, and a defect manufacturing time y. Note that, in the following description, even when simply described as "brief stop time fi", the time means the "brief stop time fi per product for each error". In addition, the calculation unit 112 outputs the calculated effective takt time $t_1$, the ideal takt time to, the error time $t_E$, the brief stop time fi per product for each error, and the defect manufacturing time y to the model construction unit 113, the detection unit 114, and the evaluation unit 115.

The "effective takt time ti" is a takt time including a brief stop time and time required for producing a defective for a target lot. Specifically, the effective takt time ti is an operating time of the machine for each non-defective. The calculation unit 112 calculates the effective takt time ti using the following equation (1):

$$\text{Effective takt time } t_1 = \text{operating time Mt/number of non-defectives Gc} \ldots (1)$$

The "ideal takt time $t_0$" is a takt time related to the production of all products except for the brief stop time for the target lot. That is, it is a takt time when it is assumed that the machine can produce a target lot without an error and there are no defectives. Specifically, the ideal takt time $t_0$ is a manufacturing time per number of products in the total number of products, the total number of products includes the produced non-defectives and defectives, and the manufacturing time is time from a start to an end of the production. The calculation unit 112 calculates the ideal takt time to using the following equation (2):

$$\text{Ideal takt time } t_0 = \text{manufacturing time Ot/number of products Pc} \ldots (2)$$

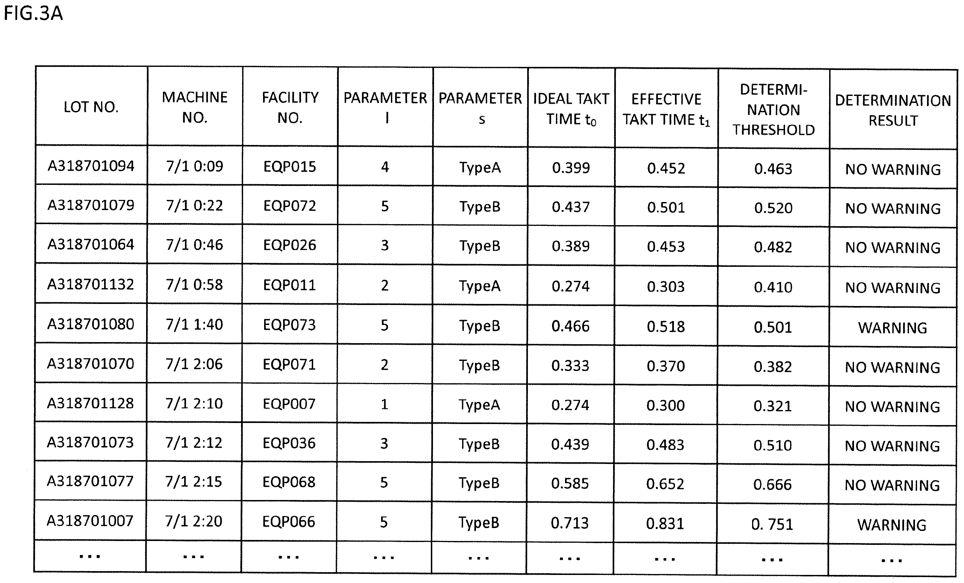

Fig. 3A illustrates the effective takt time ti obtained by equation (1) and the ideal takt time to obtained by equation (2) from the operating time, the manufacturing time, the number of products, and the number of non-defectives in Fig. 2A. Specifically, for the lot number "A318701094", the effective takt time $t_1$ "0.452" is obtained from 903/1999 (operating time/number of non-defectives), and the ideal takt time to "0.399" is obtained from 798/2000 (manufacturing time/number of products). In the example of Fig. 3A, the fourth decimal place is rounded off. Further, a "determination threshold" and a "determination result" which are items of data in Fig. 3A will be described later.

The data illustrated in Fig. 3A is for explanation, and the calculation unit 112 does not have to generate data having the configuration illustrated in Fig. 3A. That is, the information such as the start time can be specified with reference to the log data, and it is therefore sufficient that the calculation unit 112 outputs only the obtained ideal takt time $t_0$ and effective takt time $t_1$ to the model construction unit 113, the detection unit 114, and the evaluation unit 115 in association with the lot number.

The "error time $t_E$" is a value obtained by dividing the stop time by the number of non-defectives. The calculation unit 112 calculates the error time $t_E$ using the following equation (3):

$$\text{Error time } t_E = \text{stop time Et/number of non-defectives}$$
$$Gc...(3)$$

The "brief stop time fi per product for each error" is a value obtained by dividing the error stop time of the brief stop related to the target error by the number of non-defectives for the target lot. The calculation unit 112 calculates the brief stop time fi per product for each error using the following equation (4):

$$\text{Brief stop time } f_i = \text{stop time } Et_i \text{ of error i/number}$$
$$\text{of non-defectives } Gc...(4)$$

Further, a sum of the "brief stop time fi" of all errors is the "error time $t_E$" as shown in equation (5):

$$t_E = \Sigma f_i...(5)$$

Therefore, the calculation unit 112 may calculate the error time $t_E$ using equation (5) instead of equation (3).

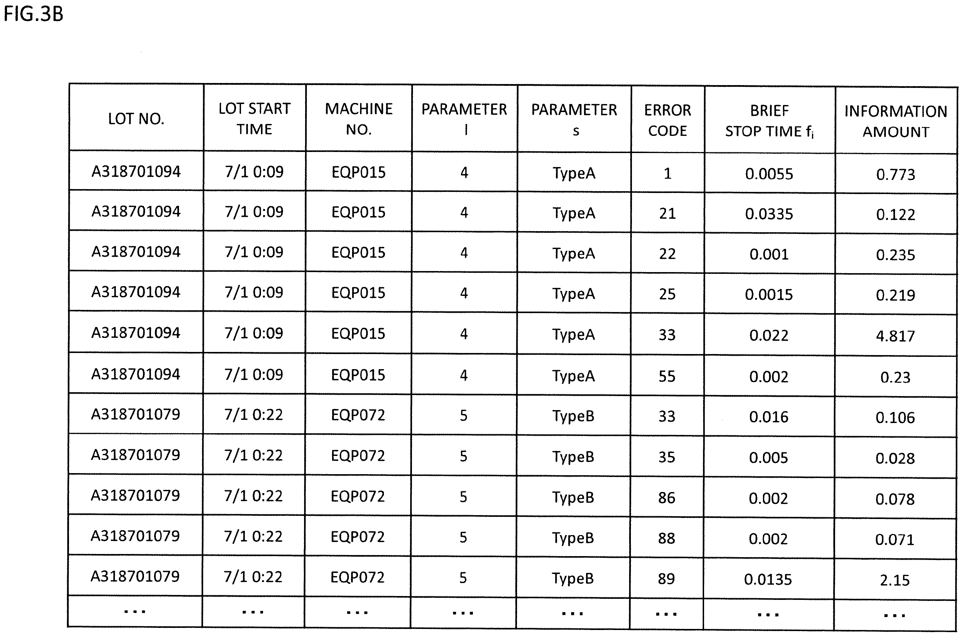

Fig. 3B illustrates the brief stop time fi per product for each error obtained by equation (4) from the error stop time and the number of products in Fig. 2B. For example, for the error of the error code "1" of the lot number "A318701094", the brief stop time fi "0.0055" is obtained from 11/1999 (error stop time/number of non-defectives). Note that "information amount" as an item of data in Fig. 3B will be described later.

The data illustrated in Fig. 3B is for explanation, and the calculation unit 112 does not have to generate data having the configuration illustrated in Fig. 3B. That is, the information such as the start time can be specified with reference to the log data, and it is therefore sufficient that the calculation unit 112 outputs only the obtained brief stop time fi to the model construction unit 113, the detection unit 114, and the evaluation unit 115 in association with the lot number and the error code.

The "defect manufacturing time" is time corresponding to a loss time due to the production of the defectives, that is, a value representing the production time of the defectives with respect to the production of one non-defective product. The calculation unit 112 calculates the defect manufacturing time using the following equation (6). This defect manufacturing time is obtained by replacing "yield" represented by a number ratio with a time scale, and has a meaning of defective manufacturing time for each product.

$$\text{Defect manufacturing time } y = \text{manufacturing time } Ot \cdot$$
$$\{(\text{number of products } Pc - \text{number of non-defectives}$$
$$Gc)/(\text{number of products } Pc \cdot \text{number of non-defectives}$$
$$Gc)\}...(6)$$

The model construction unit 113 constructs the model data D2 for evaluating the production performance of the machine on the basis of operation data as data related to the operation and production status of the machine. A model constructed by the model construction unit 113 estimates a distribution of expected performance values with respect to production conditions such as a product number of a use machine or a manufactured product. The performance values include the "ideal takt time $t_0$", the "effective takt time ti", the "brief stop time fi", and the "defect manufacturing time y" described above. The four performance values satisfy a relationship of the following equation (7):

$$\texttt{Effective takt time } t_1 = \texttt{ideal takt time } t_0 + \texttt{total of}$$

$$\texttt{brief stop time } f_i \texttt{ for each error + defect manufacturing time}$$

$$y\dots(7)$$

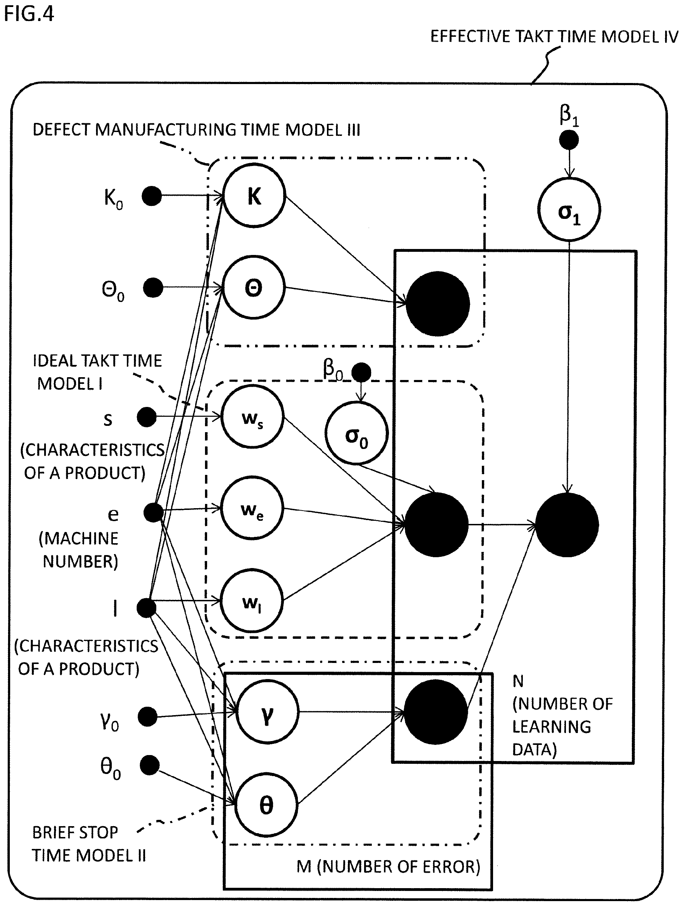

The model construction unit 113 estimates parameters for representing estimated distributions of these performance values, and stores the estimated parameters in the storage unit 13 as the model data D2. Further, this model is configured from sub-models of the respective performance values. That is, the sub-models include an ideal takt time model I for estimating the ideal takt time, a brief stop time model II for estimating the brief stop time, a defect manufacturing time model III for estimating the defect manufacturing time, and an effective takt time model IV for estimating the effective takt time. These models are shown in Fig. 4.

The models I to IV are models in which a variation in the performance values such as the takt time is regarded as a stochastic event, and Fig. 4 illustrates a stochastic dependence relationship between variables by a graph with arrows, called DAG. Parameters $K$, $\Theta$, $w_s$, $w_e$, $w_l$, $\gamma$, $\theta$, $\sigma_0$, and $\sigma_1$ represented by black in white circles in Fig. 4 are parameters stored in the model data D2, and are estimated by the Bayesian inference.

The variables $y$, $t_0$, $f_i$, and $t_i$ (parameters indicated in outline characters in black circles) illustrated in Fig. 4 are the performance values described above. As described above, the performance values calculated by the calculation unit 112 using the log data D1 are referred to as "observation values" as specifically measured values. The observation values calculated by the calculation unit 112 are outputted to the model construction unit 113, the detection unit 114, and the evaluation unit 115. Further, a distribution of values that can be taken by the variables $y$, $t_0$, $f_i$, and ti under a certain production condition is estimated by the model constructed by the model construction unit 113. These values are "estimated values" of the variables $y$, $t_0$, $f_i$, and $t_i$.

The parameters indicated by small black circles illustrated in Fig. 4 are parameters externally designated, and s, e, and 1 are parameters determined in accordance with conditions of a machine to be used, a product to be produced, and the like. $K_0$, $\Theta_0$, $\gamma_0$, $\theta_0$, $\beta_0$, and $\beta_1$ control model estimation by parameters called hyperparameters. The hyperparameters are inputted from a machine or an external device via the communication unit 12, or inputted by an operator via the input unit 14, for example. In the example shown in Fig. 4, it is assumed that the parameters s and 1 are determined by "characteristics of a product to be manufactured", and the parameter e is determined by the "machine number".

In the example illustrated in Fig. 4, a value N is the number of pieces of learning data when each model is constructed. Further, a value M is the number of types of error numbers of errors that cause the brief stop in the target lot.

In the following description and equations, the variables of the ideal takt time to, the effective takt time $t_1$, the brief stop time fi, and the defect manufacturing time y are represented as follows for convenience. Note that, when simply used as variables, to, $t_1$, $f_i$, and y are represented without using a decorative symbol.

$\overline{t}_0, \overline{f}_i, \overline{y}, \overline{t}_1$ : Observation values used at time of model construction
$\hat{t}_0, \hat{f}_i, \hat{y}, \hat{t}_1$ : Sample group generated from estimated probability distribution
$t_0, f_i, y, t_1$: New observation values used by detector and evaluator

<<Bayesian inference>>

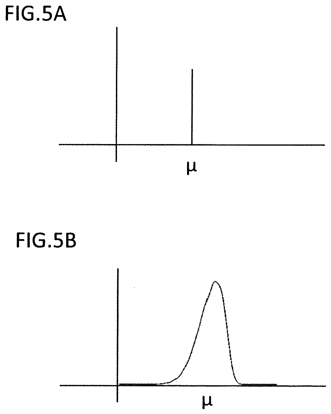

The model construction unit 113 constructs a model by the Bayesian inference. The Bayesian inference will be described here. The Bayesian inference estimates a variable of interest (for example, takt time) as a distribution of values. In the Bayesian inference, a distribution of variables is represented by estimating a parameter (average or variance in a normal distribution) representing the distribution. In the Bayesian inference, if there is prior knowledge about the value of the variable, an estimation result can be controlled by representing the prior knowledge as a prior distribution. Further, in the Bayesian inference, parameters such as an average $\mu$ and a standard deviation $\sigma$ are also estimated as a distribution, and thus section estimation is possible. Therefore, hypothesis testing that does not require a null hypothesis can be performed. That is, instead of point estimation for estimating a specific average value $\mu$ as illustrated in Fig. 5A, distribution estimation (section estimation) for estimating a distribution of the average $\mu$ as illustrated in Fig. 5B is used for identification.

An example of parameter estimation by the Bayesian inference will be described. It is assumed that there is a random variable x to be estimated, and this varies in accordance with a normal distribution represented by two parameters, the average $\mu$ and the variance $\sigma$. In the Bayesian inference, the parameters $\mu$ and $\sigma$ are estimated. At this time, the following relationship is established.

[Formula 1]

$$p(\mu, \sigma|\bar{x}) = \frac{p(\bar{x}|\mu, \sigma)p(\mu, \sigma)}{p(\bar{x})}$$
$$\propto p(\bar{x}|\mu, \sigma)p(\mu, \sigma) \qquad \ldots (8)$$

The left side in equation (8) represents a probability distribution of values that can be taken by the parameters $\mu$ and $\sigma$ when actual observation values $x_1$, $x_2$,...$x_N$ of the random variable x are obtained, and the left side is referred to as a posterior probability distribution. The first term of the numerator on the right side, p (x | $\mu$, $\sigma$), is an index representing likelihood, assuming that the observation values $x_1$ to $x_N$ are generated from the normal distribution by the parameters $\mu$ and $\sigma$, and is referred to as likelihood. Further, p ($\mu$, $\sigma$), is prior knowledge (prior distribution) related to the parameters $\mu$ and $\sigma$, and is a probability distribution predicted for the random variables $\mu$ and $\sigma$ before obtaining the observation values $x_1$, $x_2$, ... $X_N$. The denominator p (x) on the right side is fixed, and thus in the model construction unit 113, the denominator is removed to obtain a proportional expression as shown in equation (8).

The posterior distributions of the parameters $\mu$ and $\sigma$ based on the Bayesian inference by equation (8) can be obtained by a sampling method such as Markov chain Monte Carlo methods (MCMC) or variational inference such as a VB-EM algorithm.

When the posterior probability distributions of the average $\mu$ and the standard deviation $\sigma$ are obtained, under the condition that the observation value x is obtained, the estimated distribution (posterior probability distribution) of x can be represented by the following equation (9).

[Formula 2]

$$p(x|\bar{x}) = \int p(x|\mu, \sigma)p(\mu, \sigma|\bar{x})d\mu d\sigma \qquad \ldots (9)$$

$\bar{x}$ In equations (8) and (9) and the following description, indicates the observation value x. In the right side of equation (9),

$$p(x|\mu, \sigma)$$

indicates a probability that the observation value x newly occurs from the distribution represented by the average $\mu$ and the standard deviation $\sigma$, and can be directly obtained from the assumed probability distribution (normal distribution in this example). Furthermore, p ($\mu$, $\sigma$ | x) on the right side is a probability distribution specified by the Bayesian inference. In equation (9), the posterior probability distribution of the observation value x is obtained by integrating out with every average $\mu$ and standard deviation $\sigma$.

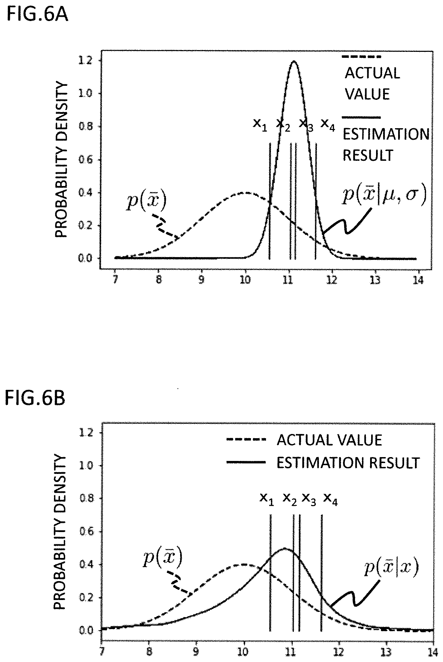

Fig. 6A illustrates a distribution of the variable x (solid line) obtained using maximum likelihood estimation (least squares method). Fig. 6B is a distribution of the variable x (solid line) obtained using the Bayesian inference. In Figs. 6A and 6B, a broken line indicates an actual distribution of the variable x. Assuming that the observation values $x_1$, $x_2$, $x_3$, and $x_4$ are obtained in a case where the actual distribution is indicated by a broken line, an estimation result of the probability distribution as indicated by a solid line in Fig. 6A is obtained because the prior distribution is not considered in the maximum likelihood estimation. On the other hand, as illustrated in Fig. 6B, in the Bayesian inference, even in a case where the actual distribution and the observation values $x_1$, $x_2$, $x_3$, and $x_4$ are similar to those in Fig. 6A, a probability distribution close to the actual distribution can be obtained because the prior distribution can be considered. Note that this example is an extreme example, and in general, even in the maximum likelihood estimation method, a parameter representing a distribution close to an actual distribution can be obtained by performing parameter estimation on the basis of a sufficient number of observation values. An essential difference from the Bayesian inference is that, while there is only one set of parameters ($\mu$, $\sigma$) obtained by the maximum likelihood estimation, parameters are also obtained as a distribution in the Bayesian inference.

<<Ideal takt time model>>

The construction of the ideal takt time model I in the model construction unit 113 will be described. The ideal takt time model I is a model indicated by a broken line illustrated in Fig. 4. This model is used to estimate a distribution of values taken by the ideal takt time to.

The ideal takt time model I is constructed by estimating parameters $w_s$, $w_e$, $w_l$, and $\sigma_0$. The parameters s, e, and 1 correspond to production conditions and are specified as given values. The model construction unit 113 estimates the distribution of the parameters $w_s$, $w_e$, $w_l$, and $\sigma_0$ by the following equation (10) using the observation value of the past ideal takt time to calculated by the calculation unit 112 from the log data D1.

[Formula 3]

$$p(w_e, w_s, w_l, \sigma_0 | \bar{t_0}, e, s, l)$$
$$\propto p(\bar{t_0} | e, s, l; w_e, w_s, w_l, \sigma_0) p(w_e, w_s, w_l, \sigma_0)$$
$$= \mathrm{LogN}(\bar{t_0}; \log(\mathrm{w_e e} + \mathrm{w_s s} + \mathrm{w_l l}), \sigma_0) \mathrm{p}(\mathrm{w_e, w_s, w_l}, \sigma_0) \qquad \ldots (10)$$

where the first term of the second equation on the right side, LogN (x; $\mu$, $\sigma$), represents that x follows a log-normal distribution.

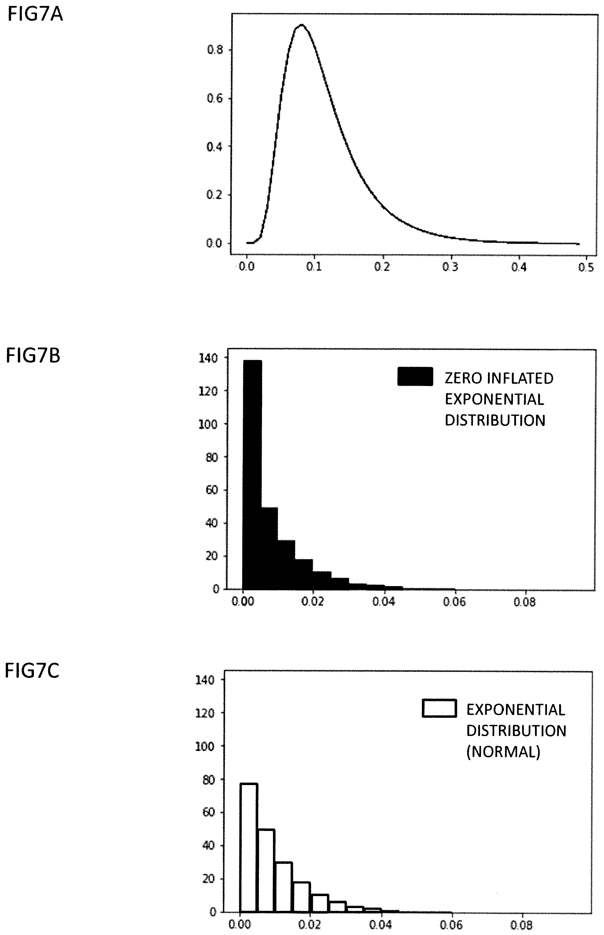

Fig. 7A illustrates an example of a log-normal distribution. The "logarithmic exponential distribution" is a distribution of x when a logarithm (log (x)) of the random variable x follows a normal distribution, and here, the ideal takt time $t_0$ corresponds to the observation value x. Unlike the normal distribution, this log-normal distribution can be used for a variable that does not take a negative value. The ideal takt time to does not take a negative value, and thus a log-normal distribution is used here. As shown in Fig. 7A, in the log-normal distribution, the distribution is thick in the left.

Equation (10) corresponds to equation (8) for the description of the Bayesian inference described above, and parameter estimation based on this equation is hereinafter represented as the following (11).

[Formula 4]

$$p(t_0 | e, s, l) \sim \mathrm{LogN}(\log(\mathrm{w_e e} + \mathrm{w_s s} + \mathrm{w_l l}), \sigma_0) \qquad \ldots (11)$$

When the parameters $w_s$, $w_e$, $w_l$, and $\sigma_0$ for the ideal takt time estimation are obtained by the model construction unit 113, a posterior probability distribution of the ideal takt time $t_0$ can be estimated by the following equation (12).

[Formula 5]

$$p(t_0 | \bar{t_0}, e, s, l)$$
$$= \int \mathrm{LogN}(\mathrm{t_0}; \log(\mathrm{w_e e} + \mathrm{w_s s} + \mathrm{w_l l}), \sigma_0) \mathrm{p}(\mathrm{w_e, w_s, w_l}, \sigma_0 | \bar{t_0}, s, e, l) dw_e dw_s dw_l d\sigma_0$$
$$\ldots (12)$$

This is an expression corresponding to equation (9) for the description of the Bayesian inference described above, and this calculation is performed by the detection unit 114 described later.

That is, equation (12) represents the distribution (posterior probability distribution) of the ideal takt time estimated from the observation value $t_0$ of the ideal takt time observed in the past (used for model estimation) and the production conditions of s, e, and 1. As a result, when the ideal takt time of a certain lot is (newly) calculated by the calculation unit 112, whether the performance at that time is good or bad can be evaluated by comparing with the probability distribution.

<<Brief stop time model>>

Next, the construction of the brief stop time model II in the model construction unit 113 will be described. The brief stop time model II is a model indicated by an alternate long and short dash line illustrated in Fig. 4. The probability distribution of the brief stop time fi for each error as a model target is estimated from the observed brief stop time fi and the distribution of the parameters y and 8 obtained by the production conditions e and 1 and the hyperparameters $\gamma_0$ and $\theta_0$. Note that the hyperparameters yo and $\theta_0$ are parameters for representing the prior distributions of the parameters $\gamma$ and $\theta$, and generally specify values that have a distribution with little bias. As illustrated in Fig. 4, when the number of types of errors is M in a target machine group, the model construction unit 113 inputs the brief stop time $f_i$ for each of the M types of errors.

The observation value of the brief stop time $f_i$ calculated by the calculation unit 112 from the log data D1 is inputted to the model construction unit 113, and further, using the production conditions e and 1 and the hyperparameters $\gamma_0$ and $\theta_0$, parameters $\gamma$ and $\theta$ for representing the probability distribution of the brief stop time $f_i$ of each of the M errors are estimated by the following equation (13).

[Formula 6]

$$p(f_i|e,l) \sim \mathrm{Exp}_0(f_i; \gamma_i^{e,l}, \theta_i^{e,l}) \quad \cdots (13)$$

where $\mathrm{Exp}_0()$ is a zero inflated exponential distribution. Further, $\gamma_i$ and $\theta_i$ are parameters estimated for each of e, 1, and i. That is, $\gamma_i$ and $\theta_i$ are parameters of the number of combinations of e $\times$ 1 for each i, but parameters may be compressed using a matrix decomposition method such as non-negative matrix factorization (NMF), and substantially e $\times$ 1 parameters may be obtained from fewer parameters. In this case, in addition to an advantage that a capacity of the model data D2 can be reduced, there is an advantage that the parameter can be estimated for a combination condition of the production conditions e and 1 that do not exist at the time of model construction. The parameter i is an index for identifying the type of error, corresponds to, for example, an error code, and takes a natural number of 1 to M.

Fig. 7B shows an example of the zero inflated exponential distribution, and Fig. 7C shows an example of the exponential distribution. The zero inflated exponential distribution is a synthesized distribution of a normal exponential distribution and a Bernoullian distribution, and it is considered that the random variable occurs in accordance with the following equation (14).

[Formula 7]

$$\begin{cases} \theta & (x=0) \\ (1-\theta)\gamma e^{-\gamma x} & (x \neq 0) \end{cases} \quad \cdots (14)$$

The zero inflated exponential distribution is obtained by the above function, as illustrated in Figs. 7B and 7C, the zero inflated exponential distribution is a distribution in which more zeros occur than in the normal exponential distribution.

<<Defect manufacturing time model>>

The construction of the defect manufacturing time model III in the model construction unit 113 will be described. The defect manufacturing time model III is a model indicated by a two-dot chain line illustrated in Fig. 4. Here, the distributions of parameters K and $\Theta$ are estimated from the observed defect manufacturing time y, the production conditions e and 1, and the hyperparameters Ko and $\Theta_0$ by the following equation (15). Again, K and $\Theta$ are estimated for each of e and 1. However, similarly to $\gamma_i$ and $\theta_i$ in the brief stop time model, the parameters may be compressed by NMF or the like.

[Formula 8]

$$p(y|e,l) \sim \Gamma(y; \kappa^{e,l}, \Theta^{e,l}) \quad \cdots (15)$$

where $\Gamma$ () represents a gamma distribution.

<<Effective takt time model>>

The construction of the effective takt time model IV in the model construction unit 113 will be described. As illustrated in Fig. 4, the effective takt time model IV can be considered as a sum of the ideal takt time $t_0$, the brief stop time fi for each error, and the defect manufacturing time y, and estimates the parameter $\sigma_1$ by the following equation (16).

[Formula 9]

$$p(t_1|s,e,l) \sim \mathrm{LogN}p(t_1; t_0 + y + \sum_i f_i, \sigma_1) \quad \cdots (16)$$

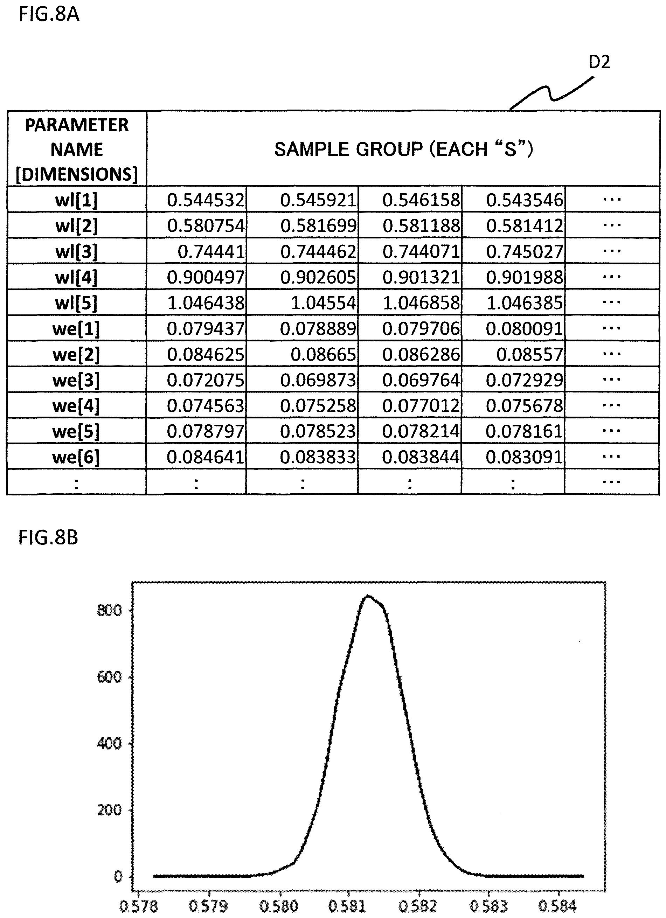

The model construction unit 113 stores the model parameters of the ideal takt time model I, the brief stop time model II, the defect manufacturing time model III, and the effective takt time model IV obtained in this manner as the model data D2 in the storage unit 13. Fig. 8A illustrates an example of the model data D2 configured by the model parameters. As described above, in the model data D2, for example, the probability distribution of the parameters is represented by a sample group obtained by a sampling method or the like. The example of Fig. 8A is an example in which S estimated values are obtained using a sampling method or the like. In Fig. 8A, the parameter having a parameter name "$w_l$" is from 1 to 5 (1 number of suffixes, five dimensions), and the parameter having a parameter name "$w_e$" is from 1 to 6 (six dimensions), but this is an example. For example, a distribution as illustrated in Fig. 8B is obtained from the sample group (lateral direction) having the parameter name $w_l$ [2] in Fig. 8A.

The effective takt time ti when production is performed under the production conditions s, e, and 1 is inputted to the detection unit 114 via the calculation unit 112 as a new observation value. The detection unit 114 estimates a posterior probability distribution p ($t_1$ |s, e, l) of the effective takt time for the production conditions s, e, and 1 using the parameters of the model data D2 stored in the storage unit 13. Further, in comparison with the estimated posterior probability distribution p ($t_1$ |s, e, l), when the observed effective takt time $t_1$ becomes a predetermined condition, a deterioration in performance of the machine is detected.

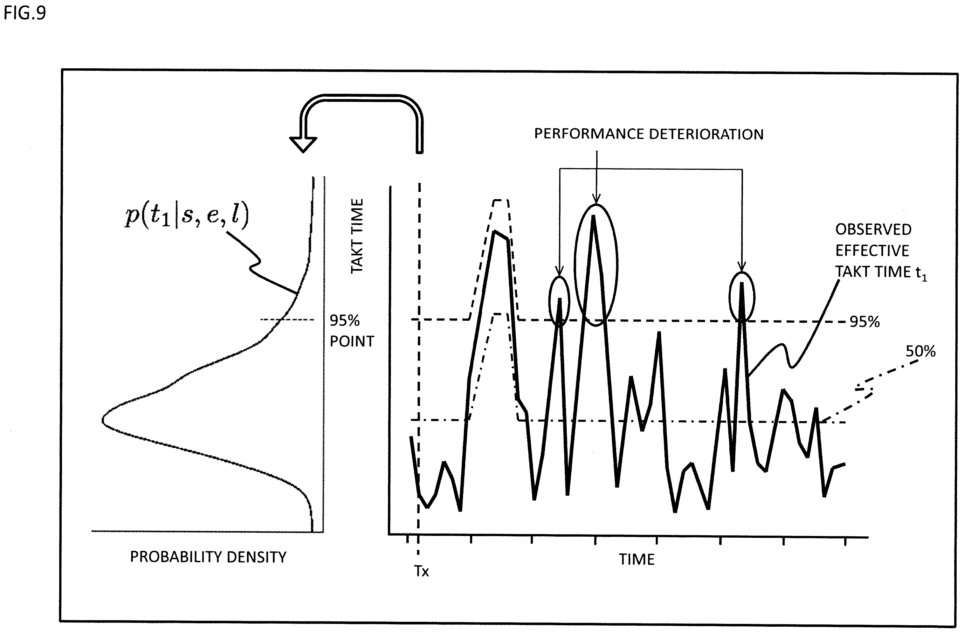

Fig. 9 is a diagram illustrating detection of performance deterioration in the detection unit 114. The graph on the left in Fig. 9 illustrates the posterior probability distribution p ($t_1$ |s, e, l) of the effective takt time estimated from the model data D2 with the vertical axis as the takt time and the horizontal axis as a probability density of a histogram. The graph on the right in Fig. 9 is a graph of the observed effective takt time ti when the horizontal axis is time (for example, day) and the vertical axis is takt time. In this graph, a 95% point of the probability distribution p ($t_1$ |s, e, l) of the estimated effective takt time is indicated by a broken line. The 95% point is a probability distribution of the effective takt time, and is the takt time when a cumulative probability from below is 95%. Further, the takt time (median value) at which the cumulative probability is 50% is indicated by an alternate long and short dash line. For example, the values at the 95% point and the 50% point at a time indicated by Tx in the graph on the right are obtained from the histogram on the left. In this way, the values of the 95% point and the 50% point illustrated in the graph on the right are specified from the probability distribution at each time. The larger the takt time, the lower the production performance, and thus the higher the takt time, the lower the performance in the graph on the right. Note that a method of calculating the probability distribution of the effective takt time will be described later.

The detection unit 114 uses a value at the 95% point obtained from the probability distribution p ($t_1$ |s, e, l) of the estimated effective takt time $t_1$ as a determination threshold, determines that there is no deterioration in performance when the observed effective takt time ti is smaller than the determination threshold, and detects that the performance has decreased when the observed effective takt time ti is larger than a value at the 95% point.

As described above, in the present application, by estimating the effective takt time using the Bayesian inference, it is possible to directly obtain how much the performance has deteriorated as compared with the past performance distribution on a probability scale.

The "determination threshold" in Fig. 3A is a threshold of the effective takt time ti obtained by the detection unit 114. The "determination result" indicates whether a warning is necessary, the warning being determined in response to the detection result of the deterioration in performance obtained by the detection unit 114 using the "determination threshold". In the example illustrated in Fig. 3A, when "0.339" is obtained as the ideal takt time to and "0.452" is obtained as the effective takt time $t_1$ for the lot with the lot number "A318701094", the detection unit 114 obtains "0.463" as the determination threshold. In this case, the effective takt time $t_1$ "0.452" is not larger than the determination threshold "0.463", and thus the detection unit 114 does not detect the value as deterioration in performance and determines as "no warning".

On the other hand, in the example shown in Fig. 3A, when "0.466" is obtained as the ideal takt time $t_0$ and "0.518" is obtained as the effective takt time for the lot with the lot number "A318701070", the detection unit 114 obtains "0.501" as the determination threshold. In this case, the effective takt time ti "0.518" is larger than the determination threshold "0.501", and the detection unit 114 detects that the performance has deteriorated and determines that it is necessary to output a "warning".

In this way, the detection unit 114 obtains the determination threshold using the estimated probability distribution of the effective takt time, and compares the determination threshold with the observation value of the effective takt time obtained by the calculation unit 112 to detect a deterioration in performance.

<<Calculation of distribution of effective takt time>>

The probability distribution of the effective takt time ti illustrated on the left in Fig. 9 can be obtained using the model data D2 illustrated in Fig. 8A. For example, the detection unit 114 generates n ideal takt times to, n brief stop times fi of the estimated value, and n effective takt times ti of the estimated value by the following equations (17i) to (17iv).

[Formula 10]

$$\hat{t_0} \leftarrow \text{LogN}(\log(w_e e + w_s s + w_l l), \sigma_0) \quad \cdots (1\,7\,\text{i})$$

$$\hat{f_i} \leftarrow \text{Exp}_0(\gamma^{e,l}, \theta^{e,l}) \quad \cdots (1\,7\,\text{ii})$$

$$\hat{y} \leftarrow \Gamma(\kappa^{e,l}, \Theta^{e,l}) \quad \cdots (1\,7\,\text{iii})$$

$$\hat{t_1} \leftarrow \text{LogN}(\hat{t_0} + \hat{y} + \sum_i \hat{f_i}, \sigma_1) \quad \cdots (1\,7\,\text{iv})$$

where "←" means that n samples according to the probability distribution illustrated on the right side are generated (hereinafter, the same applies).

That is, n estimated values are sampled from a set of S model parameters illustrated in Fig. 8A, S × n samples are obtained as a whole. The entire set of samples represents a posterior probability distribution of each variable (ideal takt time, and the like). These calculations are equivalent to performing the calculation corresponding to equation (9) for describing the Bayesian inference. Note that n may be one.

The evaluation unit 115 evaluates a degree of impact of each cause of the decrease in the production performance of the machine on the basis of the model data D2 stored in the storage unit 13 and the observation value of the performance value of the machine obtained through the calculation unit 112. In this case, an occurrence probability (first probability) of the observation value of the effective takt time in a case where the observation value of the cause of interest is not considered and an occurrence probability (second probability) of the observation value of the effective takt time in a case where the observation value of the cause of interest is considered are obtained, and the cause of the performance deterioration is evaluated using a difference in the information amount obtained from these probabilities as the degree of impact of the performance deterioration.

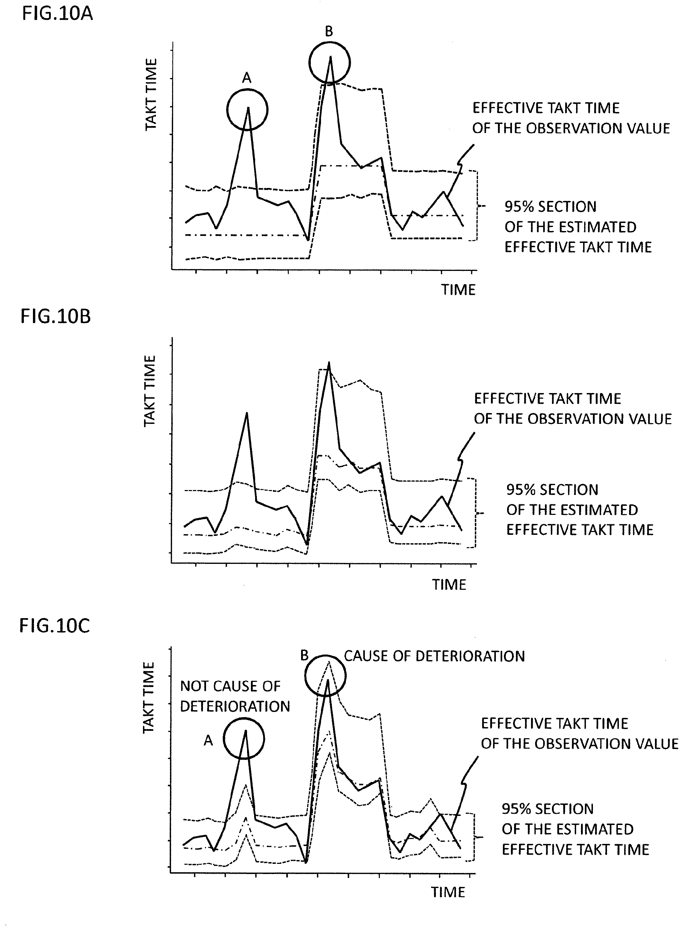

With reference to Figs. 10A to 10C, an example will be described in which a cause of performance deterioration is evaluated using the "brief stop time of each error" and the "effective takt time" as a cause of interest. Figs. 10A to 10C are graphs comparing the effective takt time ti of the observation value with the distribution of the estimated effective takt time with the horizontal axis as time and the vertical axis as the takt time. In Figs. 10A to 10C, each of the graphs in a solid line indicates the effective takt time ti of the observation value. Further, a broken line represents a range of a 95% section obtained from the distribution of the estimated effective takt time, and an alternate long and short dash line represents a median value of the distribution of the effective takt time $t_1$.

Fig. 10A illustrates a 95% section of the distribution of the effective takt time obtained without considering the measured values of the ideal takt time to and the error time $t_E$. Fig. 10B illustrates a 95% section of the distribution of the effective takt time estimated in consideration of the observation value of the ideal takt time $t_0$. Fig. 10C illustrates a 95% section of the distribution of the effective takt time obtained in consideration of the observation value of the brief stop time fi of the i-th error. Comparing Figs. 10A to 10C, it can be seen that the 95% section of the distribution of the estimated effective takt time changes. This is because the accuracy of the estimation is improved by considering the measured values of causes such as the ideal takt time $t_0$ and the brief stop time $f_i$ in the estimation of the effective takt time. The fact that the accuracy of the estimation is improved means that the cause affects the change (deterioration) in the effective takt time. That is, the estimated distribution of the effective takt time and the observation value of the effective takt time are compared, and the difference can be used for evaluating the degree of impact of the performance deterioration. Note that, although illustration is omitted, similarly, in a case where the effective takt time is estimated in consideration of the defect manufacturing time y, the accuracy of the estimation of the effective takt time can be also improved.

<<Calculation of information amount for each error>>

The calculation of the information amount for each error will be described using equations (18) and (19).

[Formula 11]

$$\hat{t_0} \leftarrow \mathrm{LogN}(\log(w_e e + w_s s + w_l l), \sigma_0)$$
$$\hat{f_i} \leftarrow \mathrm{Exp_0}(\gamma^{e,l}, \theta^{e,l})$$
$$\hat{y} \leftarrow \Gamma(\kappa^{e,l}, \Theta^{e,l})$$
$$\hat{P}(t_1 > \hat{t_1}|s, e, l) = \mathrm{LogN}(t_1 > \hat{t_1}; \hat{t_0} + \hat{y} + \sum_i \hat{f_i}, \sigma_1) \qquad \ldots (18)$$

$$\hat{P}(t_1 > \hat{t_1}|s, e, l, \hat{f_i}) = \mathrm{LogN}(t_1 > \hat{t_1}; \hat{t_0} + \hat{y} + \sum_{j \neq i} \hat{f_j} + \hat{f_i}, \sigma_1) \qquad \ldots (19)$$

where

$$\hat{P}(t_1 > \hat{t_1}|s, e, l)$$

is an upper probability that the effective takt time of the observation value becomes ti at the time of new production under the known production conditions of s, e, and 1. The upper probability refers to a probability that a value larger than the effective takt time ti of the observation value occurs in the estimated probability distribution.

$$\hat{P}(t_1 > \hat{t_1}|s, e, l, \hat{f_i})$$

is an upper probability that the effective takt time of the observation value becomes $t_1$ when the brief stop time of the observation value of the i-th error becomes $f_i$ at the time of new production under the known production conditions of s, e, and l.

That is, using the model data D2, samples of S × n sets of ideal takt time to, brief stop time fi, and defect manufacturing time y are obtained from S sets of values of each parameter as described above.

This is applied to equation (18) to obtain S × n upper probabilities with respect to the effective takt time of the observation value, as follows:

$$P(t_1 > t'_1 | s, e, l)$$

An average value of the above is the upper probability of the effective takt time of the observation value, as follows:

$$\hat{P}(t_1 > t'_1 | s, e, l)$$

Similarly, when S × n sets of samples of the ideal takt time $t_0$, the brief stop time $f_i$, and the defect manufacturing time y and the brief stop time $f_i$ of the observation value corresponding to the i-th error are used and applied to equation (19), S × n

$$P(t_1 > t'_1 | s, e, l, \hat{f}_i)$$

This is averaged to obtain an upper probability of the effective takt time of the observation value in consideration of the brief stop time of the observation value, as follows:

$$\hat{P}(t_1 > t'_1 | s, e, l, \hat{f}_i)$$

Alternatively, the upper probability can be obtained as follows. A sample based on a posterior probability distribution of S × n effective takt times ti is obtained by using samples of S × n sets of ideal takt times to, brief stop times fi, and defect manufacturing times y, and parameters $\sigma_1$ estimated in S samples. A value obtained by dividing the number of samples having a value larger than the effective takt time ti of the observation value among the samples by S × n is calculated as follows:

$$\hat{P}(t_1 > t'_1 | s, e, l)$$

Similarly, samples based on the posterior probability distribution of S × n effective takt times $t_1$ when the brief stop time fi of the i-th error is known are obtained by using samples of S × n sets of the ideal takt times $t_0$, the brief stop times fi, and the defect manufacturing times y, the parameters $\sigma_1$ estimated in the S samples, and the brief stop time $f_i$ of the i-th error of the observation value. A value obtained by dividing the number of samples having a value larger than the effective takt time ti of the observation value among the samples by S × n is calculated as follows:

$$\hat{P}(t_1 > t'_1 | s, e, l, \hat{f}_i)$$

By obtaining the information amount I(fi) for each error by the following equation (20) using the obtained occurrence probability, the degree of impact of each error on the deterioration in the production performance can be measured.

[Formula 12]

$$I(f_i) = -\log_2 \hat{P}(t_1 > t'_1 | s, e, l) - (-\log_2 \hat{P}(t_1 > t'_1 | s, e, l, \hat{f}_i)) \qquad \ldots (20)$$

For example, in Fig. 10A, at time B, the effective takt time of the observation value jumps out of the 95% section of the estimated distribution, and the upper probability of the effective takt time of the observation value

$$\hat{P}(t_1 > t'_1 | s, e, l)$$

is a small value. Thus, the information amount of the first term on the right side of equation (20)

$$-\log_2 \hat{P}(t_1 > t_1'|s,e,l)$$

is a large value. On the other hand, in Fig. 10C in which the brief stop time of the observation value of the error stop time is obtained, the 95% section of the estimated distribution greatly rises at the time B, and the upper probability

$$\hat{P}(t_1 > t_1'|s,e,l,\hat{f}_i)$$

is a large value. Therefore, the information amount of the second term on the right side of equation (20)

$$-\log_2 \hat{P}(t_1 > t_1'|s,e,l,\hat{f}_i)$$

is a small value, and I(fi) in equation (20) is a large value.

On the other hand, in Fig. 10A, at the time A, the effective takt time of the observation value is larger than the estimated effective takt time in both Figs. 10A and 10C, and the upper probability is a small value in either case. As a result, in equation (20), the first term and the second term on the right side have similar values, and thus I($f_i$) has a small value.

Accordingly, it can be determined from the brief stop time $f_i$ due to the i-th error that the i-th error has little influence on the performance deterioration at the time A in Fig. 10 but is greatly involved at the time B.

That is, the evaluation unit 115 calculates the information amount on the production performance for each error from the effective takt time of the observation value and the brief stop time of the observation value inputted from the calculation unit 112, the ideal takt time of the estimated value, the brief stop time of the estimated value, the defect manufacturing time of the estimated value estimated using the model data D2, and the parameter $\sigma_1$, and evaluates the degree of impact as a cause of the performance deterioration.

<<Calculation of information amount of ideal takt time>>

The calculation of the information amount of the ideal takt time will be described using equations (18) and (21).

[Formula 13]

$$\hat{t_0} \leftarrow \mathrm{LogN}(\log(w_e e + w_s s + w_l l), \sigma_0)$$

$$\hat{f}_i \leftarrow \mathrm{Exp}_0(\gamma^{e,l}, \theta^{e,l})$$

$$\hat{y} \leftarrow \Gamma(\kappa^{e,l}, \Theta^{e,l})$$

$$\hat{P}(t_1 > t_1'|s,e,l) = \mathrm{LogN}\left(t_1 > t_1'; \hat{t_0} + \hat{y} + \sum_i \hat{f_i}, \sigma_1\right) \qquad \ldots (18)$$

$$\hat{P}(t_1 > t_1'|s,e,l,t_0') = \mathrm{LogN}\left(t_1 > t_1'; \hat{t_0} + \hat{y} + \sum_i \hat{f_i}, \sigma_1\right) \qquad \ldots (21)$$

where

$$\hat{P}(t_1 > t_1'|s,e,l,t_0')$$

is an upper probability that the effective takt time of the observation value becomes $t_1$ when the ideal takt time of the observation value becomes $t_0$ at the time of new production under known production conditions of s, e, and l.

The estimation of the upper probability of the effective takt time of the observation value illustrated in equation (18) is similar to <<Calculation of information amount for each error>>, and therefore description thereof is not repeated.

In equation (21), from the samples of the S × n sets of the brief stop time fi and the defect manufacturing time y and the ideal takt time of the observation values, the upper probability of the effective takt time of S × n observation values

$$P(t_1 > t_1'|s, e, l, t_0')$$

By averaging the above, as the upper probability of the effective takt time of the observation value in consideration of the ideal takt time $t_0$ of the observation value,

$$\hat{P}(t_1 > t_1'|s, e, l, t_0')$$

Here, instead of obtaining S × n upper probabilities, samples of S × n effective takt times in consideration of the ideal takt time to of the observation value are generated, and a ratio of the samples larger than the effective takt time of the observation value can be calculated as follows:

$$\hat{P}(t_1 > t_1'|s, e, l, t_0')$$

By obtaining the information amount I ($t_0$) for each error by the following equation (22) using the obtained occurrence probability, the degree of impact of the ideal takt time on the deterioration in the production performance can be measured.

[Formula 14]

$$I(t_0) = -\log_2 \hat{P}(t_1 > t_1'|s, e, l) - (-\log_2 \hat{P}(t_1 > t_1'|s, e, l, t_0')) \qquad \dots (22)$$

That is, the evaluation unit 115 calculates the information amount regarding the production performance of the ideal takt time from the effective takt time of the observation value and the ideal takt time of the observation value inputted from the calculation unit 112, the ideal takt time of the estimated value, the brief stop time of the estimated value, the defect manufacturing time of the estimated value estimated using the model data D2, and the parameter $\sigma_1$, and evaluates the degree of impact as a cause of the performance deterioration.

<<Calculation of information amount of defect manufacturing time>>

The calculation of the information amount of the defect manufacturing time will be described using equations (18) and (23).

[Formula 15]

$$\hat{t_0} \leftarrow \text{LogN}(\log(w_e e + w_s s + w_l l), \sigma_0)$$
$$\hat{f_i} \leftarrow \text{Exp}_0(\gamma^{e,l}, \theta^{e,l})$$
$$\hat{y} \leftarrow \Gamma(\kappa^{e,l}, \Theta^{e,l})$$
$$\hat{P}(t_1 > t_1'|s, e, l) = \text{LogN}(t_1 > t_1'; \hat{t_0} + \hat{y} + \sum_i \hat{f_i}, \sigma_1) \qquad \dots (18)$$

$$\hat{P}(t_1 > t_1' | s, e, l, \acute{y}) = \mathrm{LogN}(t_1 > t_1'; \hat{t_0} + \acute{y} + \sum_i \hat{f_i}, \sigma_1) \qquad \ldots (23)$$

where

$$\hat{P}(t_1 > t_1' | s, e, l, \acute{y})$$

is an upper probability that the effective takt time of the observation value becomes $t_1$ when the defect manufacturing time of the observation value becomes y at the time of new production under known production conditions of s, e, and l.

The estimation of the upper probability of the effective takt time of the observation value illustrated in equation (18) is similar to <<Calculation of information amount for each error>>, and therefore description thereof is not repeated.

In equation (23), from S × n sets of samples of the ideal takt time to and the brief stop time fi and the defect manufacturing time y of the observation value, the upper probability of the effective takt time of S × n observation values

$$P(t_1 > t_1' | s, e, l, \acute{y})$$

By averaging the above, as an upper probability of the effective takt time of the observation value in consideration of the defect manufacturing time y of the observation value,

$$\hat{P}(t_1 > t_1' | s, e, l, \acute{y})$$

Similarly to the other information amounts, the upper probability may also be obtained using a ratio of samples of the takt time having a value larger than the takt time of the observation value, instead of the average of S × n upper probabilities.

Further, by obtaining the information amount I(y) of the defect manufacturing time by the following equation (24) using the obtained value, the degree of impact of the defect manufacturing time on the deterioration in the production performance can be measured.

[Formula 16]

$$I(y) = -\log_2 \hat{P}(t_1 > t_1' | s, e, l) - (-\log_2 \hat{P}(t_1 > t_1' | s, e, l, \acute{y})) \qquad \ldots (24)$$

That is, the evaluation unit 115 calculates the information amount on the production performance of the defect manufacturing time from the effective takt time of the observation value and the defect manufacturing time of the observation value inputted from the calculation unit 112, the ideal takt time of the estimated value estimated using the model data D2 and the brief stop time of the estimated value, and the parameter $\sigma_1$, and evaluates the degree of impact as a cause of the performance deterioration.

The evaluation unit 115 determines that the greater the information amounts $I(f_i)$, $I(t_0)$, and I(y) obtained using the above method, the greater the contribution to the performance deterioration of the machine. Therefore, for example, the evaluation unit 115 may sort the information amounts $I(f_i)$, $I(t_0)$, and I(y) in descending order, and identify a large information amount $I(f_i)$, $I(t_0)$, and I(y) as a cause of deterioration in the production performance.

As described above, in the present application, the information amount for each cause related to the production performance such as the brief stop time and the defect manufacturing time for each error code is compared on the basis of the upper probability of the effective takt time. As a result, events that have been separately evaluated on different scales in the known art, such as an error stop and a yield, can be compared on a common scale, which has an effect of facilitating investigation of a cause and a countermeasure for deterioration in the production performance.

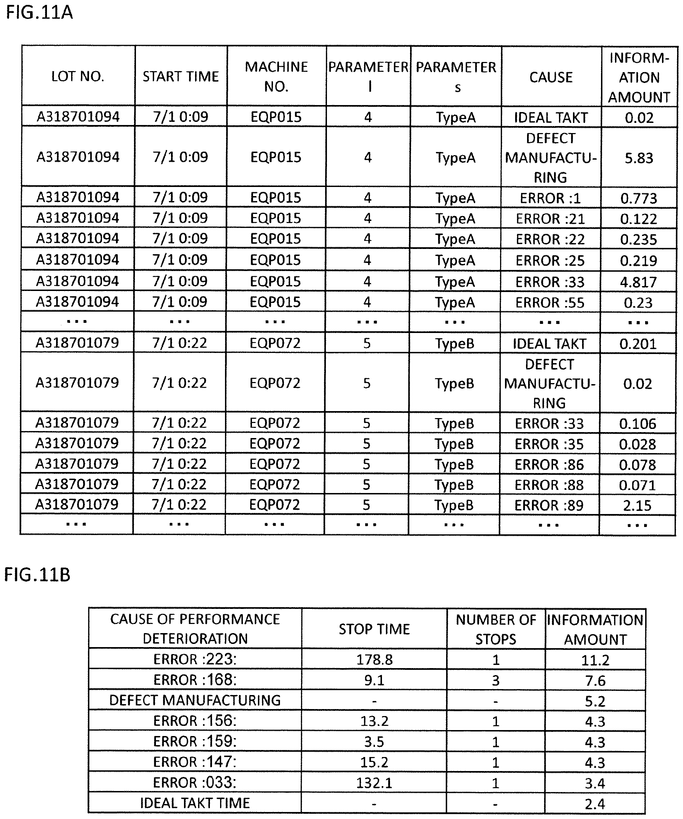

Fig. 11A illustrates an example of information amounts $I(f_i)$, $I(t_0)$, and I(y) obtained by equations (20), (22), and (25). Further, Fig. 11B illustrates an example of eight types of information amounts identified as causes of the deterioration in the production performance as a result of sorting the information amounts $I(f_i)$, $I(t_0)$, and I(y) in descending order. In the example illustrated in Fig. 11B, it can be seen that the evaluation unit 115 has evaluated "error of error code 223", "error of error code 168", "defect manufacturing", "error of error code 156", "error of error code 159", "error of error code 147", "error of error code 033", and "ideal takt time" as causes of the performance deterioration.

<Production performance evaluation method>

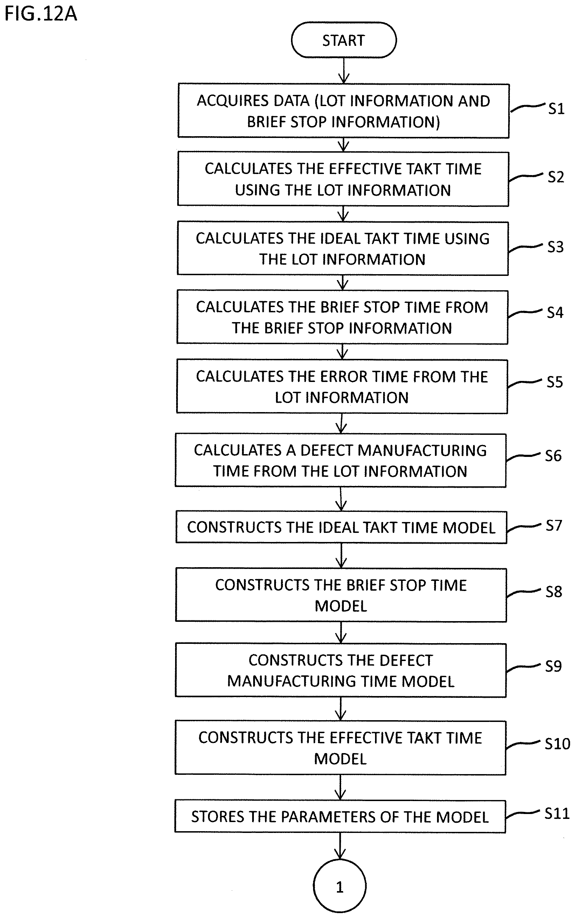

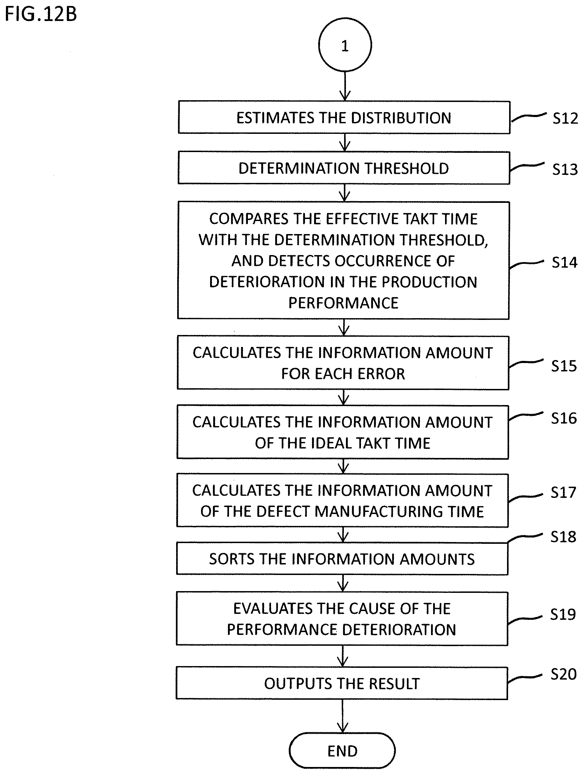

Figs. 12A and 12B are flowcharts illustrating a production performance evaluation method. As illustrated in Fig. 12A, first, the acquisition unit 111 acquires lot information and brief stop information used for evaluation of production performance via the communication unit 12 (S1). The acquired lot information and the acquired brief stop information are stored in the storage unit 13 as log data D1.

Subsequently, the calculation unit 112 calculates the effective takt time ti using the lot information (S2).

The calculation unit 112 calculates the ideal takt time to using the lot information (S3). The calculation unit 112 calculates the brief stop time fi from the brief stop information (S4).

The calculation unit 112 calculates the error time $t_E$ from the lot information (S5).

The calculation unit 112 calculates a defect manufacturing time y from the lot information (S6).

Note that the order of the processing in steps S2 to S6 is irrelevant, and for example, the order may be changed, and processing that can be simultaneously executed may be simultaneously executed.

Further, the model construction unit 113 constructs the ideal takt time model I by using the ideal takt time to of the observation value and the parameters s, e, l, and $\beta_0$ (S7).

The model construction unit 113 constructs the brief stop time model II using the brief stop time f of the observation value and the parameters e, 1, $\gamma_0$, and $\theta_0$ (S8).

The model construction unit 113 constructs the defect manufacturing time model III using the defect manufacturing time y of the observation value and the parameters $K_0$ and $\Theta_0$ (S9).

The model construction unit 113 constructs the effective takt time model IV by using the ideal takt time model I, the brief stop time model II, the defect manufacturing time model III, and the parameter $\beta 1$ (S10).

The model construction unit 113 stores the parameters of the model constructed in steps S7 to S10 in the storage unit 13 as model data D2 (S11).

Note that the order of the processing in steps S7 to S11 is irrelevant, and for example, the order may be changed, and processing that can be simultaneously executed may be simultaneously executed. The model data D2 may be stored every time the models I to IV are constructed in steps S7 to S11.

Subsequently, as illustrated in Fig. 12B, the detection unit 114 estimates the probability distribution of the effective takt time using the model data D2 stored in the storage unit 13 (S12).

The detection unit 114 specifies a determination threshold using the probability distribution obtained in step S12 (S13).

The detection unit 114 compares the effective takt time with the determination threshold, and detects occurrence of deterioration in the production performance (S14).

The evaluation unit 115 calculates the information amount for each error using the model data D2 (S15).

The evaluation unit 115 calculates the information amount of the ideal takt time using the model data D2 (S16).

The evaluation unit 115 calculates the information amount of the defect manufacturing time using the model data D2 (S17).

The evaluation unit 115 sorts the information amounts calculated in steps S15 to S17 (S18).

The evaluation unit 115 evaluates the cause of the performance deterioration from the information amount sorted in step S18 (S19).

Note that the order of the processing in steps S15 to S17 is irrelevant, and for example, the order may be changed, and processing that can be simultaneously executed may be simultaneously executed.

The output process unit 116 outputs a detection result in step S14 and an evaluation result in step S 19 (S20).

[Effects and additions]

In the production performance evaluation apparatus having the above configuration, the probability distribution is estimated using the value affecting the production of the products, and the cause of the production performance can be evaluated using the obtained information amount related to the brief stop time for each error, the information amount related to the ideal takt time, and the information amount related to the defect manufacturing time based on the yield. In this case, values obtained from different viewpoints of the time and the number ratio can be used together for evaluation by converting "yield" as the number ratio into time. Further, the production performance evaluation apparatus allows detection of a decrease in the production performance using this probability distribution. Therefore, the production performance evaluation apparatus can detect a machine with deteriorated production performance and specify the cause of the deterioration regardless of the type of the products to be produced.

In the above embodiment, the production performance evaluation apparatus, the production performance evaluation method, and the program for evaluating the production performance have been described as an example, but the present invention is not limited to the example. For example, the present invention can be realized as a work efficiency evaluation method, a work efficiency evaluation apparatus, and a program for evaluating various work efficiencies such as work efficiency in repairing an article, work efficiency in inspecting an article, work efficiency in packing an article, and work efficiency in selecting an article in addition to production efficiency relating to production of products.

For example, in a case of evaluating the work efficiency of repairing an article, the "takt time" is replaced with "time for performing work of unit work amount" related to repair, the "brief stop time" is replaced with "time for stopping due to some error" in repair work, and the "defect manufacturing time" is replaced with "loss time (failure time)" when the repair fails, and the processing is performed.

(Other embodiments)

As described above, the embodiment has been described as an example of the technique disclosed in the present application. However, the technique in the present disclosure is not limited to the embodiment, and is also applicable to the embodiment in which changes, replacements, additions, omissions, or the like are appropriately made.

(Outline of embodiment)

(1) A work efficiency evaluation method of the present disclosure includes the steps of: reading, from a storage unit, model data used for evaluating work efficiency and generated based on operation data related to work including a predetermined work time and a predetermined work amount; calculating a degree of impact of a decrease in work efficiency on the basis of data related to time required for work and a work amount by the model data; and evaluating a decrease in production performance in accordance with the degree of impact.

It is therefore possible to identify a cause of the decrease in the work efficiency for a target work.

(2) In the work efficiency evaluation method of (1), the model data may be data generated based on an ideal index that is an index when the work is ideally executed, an effective index that is an index when the work is actually executed, a stop time that is a time when the work is stopped, and a defect time that specifies a time required for a defect result obtained by the work.

Thus, an influence of the ideal index, the stop time, and the defect time can be considered in evaluating the decrease in the work efficiency.

(3) In the work efficiency evaluation method of (1), the model data may be data generated based on an ideal index obtained by a manufacturing time and a manufacturing number of products as an ideal production index of the products, an effective index obtained by an operating time of a machine including a case where the machine used for manufacturing when the products are actually produced is stopped and a number of non-defectives as a number of products manufactured as non-defectives, a stop time that is a time when the machine is stopped, and a defect manufacturing time that specifies a production time of a defective among the products that have been manufactured.

Thus, an influence of the ideal index, the stop time, and the defect time can be considered in evaluating the decrease in the production performance as the work efficiency.

(4) The work efficiency evaluation method of (3), can further include: before reading out the model data, acquiring the operation data from the machine; calculating the ideal index, the effective index, the stop time, and the defect time from the operation data; generating the model data from the ideal index, the effective index, the stop time, and the defect time; and storing the model data in the storage unit.

Thus, the model data can be generated from the operation data of a specific machine using the operation data, and accuracy of the evaluation of the production performance of the product can be improved.

(5) In the work efficiency evaluation method of (4), the operation data may be information on a parameter specifying a production condition of the machine, a time required to produce a product, and a number of products produced.

Thus, it is clarified that a parameter that specifies a production condition, a time required for production, the number of products produced, and the like are used in evaluating the decrease in the production performance as the work efficiency.

(6) In the work efficiency evaluation method of (4), the decrease in the production performance of the machine may be detected from operation data newly acquired from the machine on the basis of the model data.

As a result, when the decrease in the production performance is evaluated as the work efficiency, the model data can be sequentially updated using new operation data with which a current situation can be recognized, and the accuracy of the evaluation of the production performance of the product can be improved.

(7) In the work efficiency evaluation method of (3), a value that specifies an influence of an error in the machine on the decrease in the production performance may be obtained as the degree of impact.

Thus, an influence of the error on the decrease in the performance can be considered in evaluating the decrease

19

in the production performance as the work efficiency.

(8) In the work efficiency evaluation method of (3), a value that specifies an influence of the ideal index on the decrease in the work efficiency may be obtained as the degree of impact.

Thus, an influence of the ideal index on the decrease in the performance can be considered in evaluating the decrease in the work efficiency.

(9) In the work efficiency evaluation method of (3), a value that specifies an influence of the defect time on the decrease in the work efficiency may be obtained as the degree of impact.

Thus, an influence of the defect time on the decrease in the work efficiency can be considered in evaluating the decrease in the work efficiency.

(10) In the work efficiency evaluation method of (3), in a case where a plurality of degrees of impact is obtained as the degree of impact, an influence on the decrease in the work efficiency may be selected from a predetermined degree of impact having a high value among the plurality of degrees of impact.

Thus, a cause of the decrease in the work efficiency can be specified among the plurality of degrees of impact in evaluating the decrease in the work efficiency.

(11) In the work efficiency evaluation method of (1), in generating the model data, a probability distribution of variation of the model data can be calculated by Bayesian inference and used as the model data.

(11) A work efficiency evaluation program of the present disclosure causes a computer to implement the work efficiency evaluation method including the steps of: reading, from a storage unit, model data used for evaluating work efficiency and generated based on operation data related to work including a predetermined work time and a predetermined work amount; calculating a degree of impact of a decrease in work efficiency on the basis of data related to time required for work and a work amount by the model data; and evaluating a decrease in production performance in accordance with the degree of impact.

It is therefore possible to identify a cause of the decrease in the work efficiency for a target work.

(12) A work efficiency evaluation apparatus of the present disclosure includes an evaluation unit configured to read, from a storage unit, model data used for evaluating a time required for work and a work amount generated based on operation data related to work including a predetermined work time and a predetermined work amount, calculate a degree of impact of a decrease in work efficiency on the basis of the time required for the work and the data related to the work by the model data, and evaluate the decrease in the work efficiency in accordance with the degree of impact.

It is therefore possible to identify a cause of the decrease in the work efficiency for a target work.

The production performance evaluation method, the production performance evaluation apparatus, and the program described in all the claims of the present disclosure are realized by cooperation with hardware resources, for example, a processor, a memory, and a program.

INDUSTRIAL APPLICABILITY

The production performance evaluation method, the production performance evaluation apparatus, and the program of the present disclosure are useful, for example, for evaluation of production performance in a facility such as a factory.

EXPLANATIONS OF LETTERS OR NUMERALS

| | |
|---|---|
| 1A | production performance evaluation apparatus |
| 11 | control unit |
| 111 | acquisition unit |
| 112 | calculation unit |
| 113 | model construction unit |
| 114 | detection unit |
| 115 | evaluation unit |
| 116 | output process unit |
| 12 | communication unit |
| 13 | storage unit |
| 14 | input unit |
| 15 | output unit |
| D1 | log data |
| D2 | model data |
| P | production performance evaluation program |

**Claims**

1. A work efficiency evaluation method, comprising steps of:

   reading, from a storage unit, model data used for evaluating work efficiency and generated based on operation data related to work including a predetermined work time and a predetermined work amount;
   calculating a degree of impact of a decrease in work efficiency based on data related to a time required for work and a work amount by the model data; and
   evaluating the decrease in the work efficiency in accordance with the degree of impact.

2. The work efficiency evaluation method according to claim 1, wherein the model data is data generated based on an ideal index that is an index when the work is ideally executed, an effective index that is an index when the work is actually executed, a stop time that is a time when the work is stopped, and a defect time that specifies a time required for a defect result obtained by the work.

3. The work efficiency evaluation method according to claim 1 or 2, wherein the model data is data generated based on an ideal index obtained by a manufacturing time and a manufacturing number of products as an ideal production index of the products, an effective index obtained by an operating time of a machine including a case where the machine used for manufacturing when the products are actually produced is stopped and a number of non-defectives as a number of products manufactured as non-defectives, a stop time that is a time when the machine is stopped, and a defect time that specifies a production time of a defective among the products that have been manufactured.

4. The work efficiency evaluation method according to claim 3, further comprising:

   before reading out the model data,
   acquiring the operation data from the machine;
   calculating the ideal index, the effective index, the stop time, and the defect time from the operation data;
   generating the model data from the ideal index, the effective index, the stop time, and the defect time; and
   storing the model data in the storage unit.

5. The work efficiency evaluation method according to claim 4, wherein the operation data is information on a parameter specifying a production condition of the machine, a time required to produce a product, and a number of products produced.

6. The work efficiency evaluation method according to claim 4 or 5, further comprising detecting a decrease in production performance as work efficiency of the machine, from operation data newly acquired from the machine based on the model data.

7. The work efficiency evaluation method according to any one of claims 3 to 6, wherein a value that specifies an influence of an error in the machine on the decrease in the work efficiency is obtained as the degree of impact.

8. The work efficiency evaluation method according to any one of claims 3 to 7, wherein a value that specifies an influence of the ideal index on the decrease in the work efficiency is obtained as the degree of impact.

9. The work efficiency evaluation method according to any one of claims 3 to 8, wherein a value that specifies an influence of the defect time on the decrease in the work efficiency is obtained as the degree of impact.

10. The work efficiency evaluation method according to any one of claims 3 to 9, wherein in a case where a plurality of degrees of impact is obtained as the degree of impact, an influence on the decrease in the work efficiency is selected from a predetermined degree of impact having a high value among the plurality of degrees of impact.

11. The work efficiency evaluation method according to any one of claims 1 to 10, wherein in generating the model data, a probability distribution of variation of the model data is calculated by Bayesian inference and used as the model data.

12. A program causing a computer to execute the work efficiency evaluation method described in any one of claims 1 to 11.

13. A work efficiency evaluation apparatus comprising an evaluation unit configured to read, from a storage unit, model data used for evaluating a time required for work and a work amount generated based on operation data related to work including a predetermined work time and a predetermined work amount, calculate a degree of impact of a decrease in work efficiency based on the time required for the work and the data related to the work by the model data, and evaluate the decrease in the work efficiency in accordance with the degree of impact.

FIG.1

**WORK EFFICIENCY EVALUATION APPARATUS** — 1A

CONTROL UNIT — 11

STORAGE UNIT — 13

COMMUNICATION UNIT — 12

ACQUISITION UNIT — 111

PRODUCTION PERFORMANCE EVALUATION PROGRAM — P

CALCULATION UNIT — 112

LOG DATA — D1

MODEL CONSTRUCTION UNIT — 113

MODEL DATA — D2

DETECTION UNIT — 114

INPUT UNIT — 14

EVALUATION UNIT — 115

OUTPUT UNIT — 15

OUTPUT PROCESS UNUT — 116

FIG.2A

D11

| LOT NO. | MACHINE NO. | START TIME | PARAMETER l | PARAMETER s | OPERATING TIME (NIN) | MANUFAC-TURING TIME (NIN) | STOP TIME (NIN) | NUMBER OF PRODUCTS | NUMBER OF NON—DEFECTIVES |
|---|---|---|---|---|---|---|---|---|---|
| A318701094 | EQP015 | 7/1 0:09 | 4 | TypeA | 903 | 798 | 105 | 2000 | 1999 |
| A318701079 | EQP072 | 7/1 0:22 | 5 | TypeB | 1001 | 873 | 128 | 2000 | 1999 |
| A318701064 | EQP026 | 7/1 0:46 | 3 | TypeB | 906 | 778 | 128 | 2000 | 2000 |
| A318701132 | EQP011 | 7/1 0:58 | 2 | TypeA | 605 | 548 | 57 | 2000 | 2000 |
| A318701080 | EQP073 | 7/1 1:40 | 5 | TypeB | 1034 | 931 | 103 | 2000 | 1998 |
| A318701070 | EQP071 | 7/1 2:06 | 2 | TypeB | 740 | 665 | 75 | 2000 | 1998 |
| A318701128 | EQP007 | 7/1 2:10 | 1 | TypeA | 600 | 548 | 52 | 2000 | 1998 |
| A318701073 | EQP036 | 7/1 2:12 | 3 | TypeB | 966 | 878 | 88 | 2000 | 2000 |
| A318701077 | EQP068 | 7/1 2:15 | 5 | TypeB | 1303 | 1169 | 134 | 2000 | 1999 |
| A318701007 | EQP066 | 7/1 2:20 | 5 | TypeB | 1662 | 1426 | 236 | 2000 | 1999 |
| : | : | : | : | : | : | : | : | : | : |

EP 3 926 427 A1

FIG.2B

D12

| LOT NO. | MACHINE NO. | START TIME | PARAMETER l | PARAMETER s | ERROR CODE | NUMBER OF STOPS | ERROR STOP TIME (NIN) |
|---|---|---|---|---|---|---|---|
| A318701094 | EQP015 | 7/1 0:09 | 4 | TypeA | 1 | 1 | 11 |
| A318701094 | EQP015 | 7/1 0:09 | 4 | TypeA | 21 | 1 | 67 |
| A318701094 | EQP015 | 7/1 0:09 | 4 | TypeA | 22 | 1 | 2 |
| A318701094 | EQP015 | 7/1 0:09 | 4 | TypeA | 25 | 3 | 3 |
| A318701094 | EQP015 | 7/1 0:09 | 4 | TypeA | 33 | 1 | 44 |
| A318701094 | EQP015 | 7/1 0:09 | 4 | TypeA | 55 | 1 | 4 |
| A318701079 | EQP072 | 7/1 0:22 | 5 | TypeB | 33 | 1 | 32 |
| A318701079 | EQP072 | 7/1 0:22 | 5 | TypeB | 35 | 11 | 10 |
| A318701079 | EQP072 | 7/1 0:22 | 5 | TypeB | 86 | 1 | 4 |
| A318701079 | EQP072 | 7/1 0:22 | 5 | TypeB | 88 | 1 | 4 |
| A318701079 | EQP072 | 7/1 0:22 | 5 | TypeB | 89 | 13 | 27 |
| A318701079 | EQP072 | 7/1 0:22 | 5 | TypeB | 91 | 4 | 11 |
| A318701064 | EQP026 | 7/1 0:46 | 3 | TypeB | 35 | 6 | 13 |
| : | : | : | : | : | : | : | : |

FIG.3A

| LOT NO. | MACHINE NO. | FACILITY NO. | PARAMETER l | PARAMETER s | IDEAL TAKT TIME $t_0$ | EFFECTIVE TAKT TIME $t_1$ | DETERMINATION THRESHOLD | DETERMINATION RESULT |
|---|---|---|---|---|---|---|---|---|
| A318701094 | 7/1 0:09 | EQP015 | 4 | TypeA | 0.399 | 0.452 | 0.463 | NO WARNING |
| A318701079 | 7/1 0:22 | EQP072 | 5 | TypeB | 0.437 | 0.501 | 0.520 | NO WARNING |
| A318701064 | 7/1 0:46 | EQP026 | 3 | TypeB | 0.389 | 0.453 | 0.482 | NO WARNING |
| A318701132 | 7/1 0:58 | EQP011 | 2 | TypeA | 0.274 | 0.303 | 0.410 | NO WARNING |
| A318701080 | 7/1 1:40 | EQP073 | 5 | TypeB | 0.466 | 0.518 | 0.501 | WARNING |
| A318701070 | 7/1 2:06 | EQP071 | 2 | TypeB | 0.333 | 0.370 | 0.382 | NO WARNING |
| A318701128 | 7/1 2:10 | EQP007 | 1 | TypeA | 0.274 | 0.300 | 0.321 | NO WARNING |
| A318701073 | 7/1 2:12 | EQP036 | 3 | TypeB | 0.439 | 0.483 | 0.510 | NO WARNING |
| A318701077 | 7/1 2:15 | EQP068 | 5 | TypeB | 0.585 | 0.652 | 0.666 | NO WARNING |
| A318701007 | 7/1 2:20 | EQP066 | 5 | TypeB | 0.713 | 0.831 | 0.751 | WARNING |
| ... | ... | ... | ... | ... | ... | ... | ... | ... |

EP 3 926 427 A1

FIG.3B

| LOT NO. | LOT START TIME | MACHINE NO. | PARAMETER l | PARAMETER s | ERROR CODE | BRIEF STOP TIME $f_i$ | INFORMATION AMOUNT |
|---|---|---|---|---|---|---|---|
| A318701094 | 7/1 0:09 | EQP015 | 4 | TypeA | 1 | 0.0055 | 0.773 |
| A318701094 | 7/1 0:09 | EQP015 | 4 | TypeA | 21 | 0.0335 | 0.122 |
| A318701094 | 7/1 0:09 | EQP015 | 4 | TypeA | 22 | 0.001 | 0.235 |
| A318701094 | 7/1 0:09 | EQP015 | 4 | TypeA | 25 | 0.0015 | 0.219 |
| A318701094 | 7/1 0:09 | EQP015 | 4 | TypeA | 33 | 0.022 | 4.817 |
| A318701094 | 7/1 0:09 | EQP015 | 4 | TypeA | 55 | 0.002 | 0.23 |
| A318701079 | 7/1 0:22 | EQP072 | 5 | TypeB | 33 | 0.016 | 0.106 |
| A318701079 | 7/1 0:22 | EQP072 | 5 | TypeB | 35 | 0.005 | 0.028 |
| A318701079 | 7/1 0:22 | EQP072 | 5 | TypeB | 86 | 0.002 | 0.078 |
| A318701079 | 7/1 0:22 | EQP072 | 5 | TypeB | 88 | 0.002 | 0.071 |
| A318701079 | 7/1 0:22 | EQP072 | 5 | TypeB | 89 | 0.0135 | 2.15 |
| ... | ... | ... | ... | ... | ... | ... | ... |

EP 3 926 427 A1

FIG.4

EFFECTIVE TAKT TIME MODEL IV

DEFECT MANUFACTURING TIME MODEL III

$\beta_1$

$K_0$ ● → K

$\sigma_1$

$\Theta_0$ ● → Θ

IDEAL TAKT TIME MODEL I

$\beta_0$ ●

s ● → $w_s$

$\sigma_0$

(CHARACTERISTICS OF A PRODUCT)

e ● → $w_e$

(MACHINE NUMBER)

I ● → $w_l$

(CHARACTERISTICS OF A PRODUCT)

$\gamma_0$ ● → γ

N (NUMBER OF LEARNING DATA)

$\theta_0$ ● → θ

BRIEF STOP TIME MODEL II

M (NUMBER OF ERROR)

FIG.5A

μ

FIG.5B

μ

FIG.6A

FIG.6B

FIG7A

FIG7B

ZERO INFLATED
EXPONENTIAL
DISTRIBUTION

FIG7C

EXPONENTIAL
DISTRIBUTION
(NORMAL)

FIG.8A

D2

| PARAMETER NAME [DIMENSIONS] | SAMPLE GROUP (EACH "S") | | | | |
|---|---|---|---|---|---|
| wl[1] | 0.544532 | 0.545921 | 0.546158 | 0.543546 | ⋯ |
| wl[2] | 0.580754 | 0.581699 | 0.581188 | 0.581412 | ⋯ |
| wl[3] | 0.74441 | 0.744462 | 0.744071 | 0.745027 | ⋯ |
| wl[4] | 0.900497 | 0.902605 | 0.901321 | 0.901988 | ⋯ |
| wl[5] | 1.046438 | 1.04554 | 1.046858 | 1.046385 | ⋯ |
| we[1] | 0.079437 | 0.078889 | 0.079706 | 0.080091 | ⋯ |
| we[2] | 0.084625 | 0.08665 | 0.086286 | 0.08557 | ⋯ |
| we[3] | 0.072075 | 0.069873 | 0.069764 | 0.072929 | ⋯ |
| we[4] | 0.074563 | 0.075258 | 0.077012 | 0.075678 | ⋯ |
| we[5] | 0.078797 | 0.078523 | 0.078214 | 0.078161 | ⋯ |
| we[6] | 0.084641 | 0.083833 | 0.083844 | 0.083091 | ⋯ |
| ⋮ | ⋮ | ⋮ | ⋮ | ⋮ | ⋯ |

FIG.8B

FIG.9

PERFORMANCE DETERIORATION

$p(t_1|s,e,l)$

TAKT TIME

95% POINT

OBSERVED EFFECTIVE TAKT TIME $t_1$

95%

50%

PROBABILITY DENSITY

TIME

Tx

EP 3 926 427 A1

FIG.10A

TAKT TIME

B

A

EFFECTIVE TAKT TIME
OF THE OBSERVATION VALUE

95% SECTION
OF THE ESTIMATED
EFFECTIVE TAKT TIME

TIME

FIG.10B

TAKT TIME

EFFECTIVE TAKT TIME
OF THE OBSERVATION VALUE

95% SECTION
OF THE ESTIMATED
EFFECTIVE TAKT TIME

TIME

FIG.10C

TAKT TIME

B       CAUSE OF DETERIORATION

NOT CAUSE OF
DETERIORATION

A

EFFECTIVE TAKT TIME
OF THE OBSERVATION VALUE

95% SECTION
OF THE ESTIMATED
EFFECTIVE TAKT TIME

TIME

## FIG.11A

| LOT NO. | START TIME | MACHINE NO. | PARAMETER l | PARAMETER s | CAUSE | INFORM-ATION AMOUNT |
|---|---|---|---|---|---|---|
| A318701094 | 7/1 0:09 | EQP015 | 4 | TypeA | IDEAL TAKT | 0.02 |
| A318701094 | 7/1 0:09 | EQP015 | 4 | TypeA | DEFECT MANUFACTU-RING | 5.83 |
| A318701094 | 7/1 0:09 | EQP015 | 4 | TypeA | ERROR :1 | 0.773 |
| A318701094 | 7/1 0:09 | EQP015 | 4 | TypeA | ERROR :21 | 0.122 |
| A318701094 | 7/1 0:09 | EQP015 | 4 | TypeA | ERROR :22 | 0.235 |
| A318701094 | 7/1 0:09 | EQP015 | 4 | TypeA | ERROR :25 | 0.219 |
| A318701094 | 7/1 0:09 | EQP015 | 4 | TypeA | ERROR :33 | 4.817 |
| A318701094 | 7/1 0:09 | EQP015 | 4 | TypeA | ERROR :55 | 0.23 |
| ... | ... | ... | ... | ... | ... | ... |
| A318701079 | 7/1 0:22 | EQP072 | 5 | TypeB | IDEAL TAKT | 0.201 |
| A318701079 | 7/1 0:22 | EQP072 | 5 | TypeB | DEFECT MANUFACTU-RING | 0.02 |
| A318701079 | 7/1 0:22 | EQP072 | 5 | TypeB | ERROR :33 | 0.106 |
| A318701079 | 7/1 0:22 | EQP072 | 5 | TypeB | ERROR :35 | 0.028 |
| A318701079 | 7/1 0:22 | EQP072 | 5 | TypeB | ERROR :86 | 0.078 |
| A318701079 | 7/1 0:22 | EQP072 | 5 | TypeB | ERROR :88 | 0.071 |
| A318701079 | 7/1 0:22 | EQP072 | 5 | TypeB | ERROR :89 | 2.15 |
| ... | ... | ... | ... | ... | ... | ... |

## FIG.11B

| CAUSE OF PERFORMANCE DETERIORATION | STOP TIME | NUMBER OF STOPS | INFORMATION AMOUNT |
|---|---|---|---|
| ERROR :223: | 178.8 | 1 | 11.2 |
| ERROR :168: | 9.1 | 3 | 7.6 |
| DEFECT MANUFACTURING | - | - | 5.2 |
| ERROR :156: | 13.2 | 1 | 4.3 |
| ERROR :159: | 3.5 | 1 | 4.3 |
| ERROR :147: | 15.2 | 1 | 4.3 |
| ERROR :033: | 132.1 | 1 | 3.4 |
| IDEAL TAKT TIME | - | - | 2.4 |

**FIG.12A**

START

ACQUIRES DATA (LOT INFORMATION AND BRIEF STOP INFORMATION) — S1

CALCULATES THE EFFECTIVE TAKT TIME USING THE LOT INFORMATION — S2

CALCULATES THE IDEAL TAKT TIME USING THE LOT INFORMATION — S3

CALCULATES THE BRIEF STOP TIME FROM THE BRIEF STOP INFORMATION — S4

CALCULATES THE ERROR TIME FROM THE LOT INFORMATION — S5

CALCULATES A DEFECT MANUFACTURING TIME FROM THE LOT INFORMATION — S6

CONSTRUCTS THE IDEAL TAKT TIME MODEL — S7

CONSTRUCTS THE BRIEF STOP TIME MODEL — S8

CONSTRUCTS THE DEFECT MANUFACTURING TIME MODEL — S9

CONSTRUCTS THE EFFECTIVE TAKT TIME MODEL — S10

STORES THE PARAMETERS OF THE MODEL — S11

1

FIG.12B

```
                          ( 1 )
                            |
                            v
   +----------------------------------------------+
   |          ESTIMATES THE DISTRIBUTION          |---- S12
   +----------------------------------------------+
                            |
                            v
   +----------------------------------------------+
   |          DETERMINATION THRESHOLD             |---- S13
   +----------------------------------------------+
                            |
                            v
   +----------------------------------------------+
   |        COMPARES THE EFFECTIVE TAKT TIME      |
   |     WITH THE DETERMINATION THRESHOLD,        |
   |        AND DETECTS OCCURRENCE OF             |---- S14
   |     DETERIORATION IN THE PRODUCTION          |
   |              PERFORMANCE                     |
   +----------------------------------------------+
                            |
                            v
   +----------------------------------------------+
   |     CALCULATES THE INFORMATION AMOUNT        |---- S15
   |              FOR EACH ERROR                  |
   +----------------------------------------------+
                            |
                            v
   +----------------------------------------------+
   |     CALCULATES THE INFORMATION AMOUNT        |---- S16
   |          OF THE IDEAL TAKT TIME              |
   +----------------------------------------------+
                            |
                            v
   +----------------------------------------------+
   |     CALCULATES THE INFORMATION AMOUNT        |---- S17
   |     OF THE DEFECT MANUFACTURING TIME         |
   +----------------------------------------------+
                            |                   ---- S18
                            v
   +----------------------------------------------+
   |        SORTS THE INFORMATION AMOUNTS         |
   +----------------------------------------------+
                            |
                            v
   +----------------------------------------------+
   |         EVALUATES THE CAUSE OF THE           |---- S19
   |        PERFORMANCE DETERIORATION             |
   +----------------------------------------------+
                            |                   ---- S20
                            v
   +----------------------------------------------+
   |             OUTPUTS THE RESULT               |
   +----------------------------------------------+
                            |
                            v
                       (  END  )
```

<div style="text-align:center">**INTERNATIONAL SEARCH REPORT**</div>

| International application No. |
| --- |
| PCT/JP2020/000450 |

**A.  CLASSIFICATION OF SUBJECT MATTER**
G05B 19/418(2006.01)i; G06Q 50/04(2012.01)i
FI: G05B19/418 Z; G06Q50/04
According to International Patent Classification (IPC) or to both national classification and IPC

**B.  FIELDS SEARCHED**

Minimum documentation searched (classification system followed by classification symbols)
G05B19/418; G06Q50/04

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2018-116545 A (OMRON CORP.) 26.07.2018 (2018-07-26) in particular, paragraph [0113], claims 1-3, fig. 14 | 1, 13<br>2-12 |
| Y | JP 2000-123085 A (OMRON CORP.) 28.04.2000 (2000-04-28) in particular, paragraphs [0051]-[0064], fig. 8 | 2-12 |
| A | JP 2014-92799 A (SUMITOMO HEAVY INDUSTRIES, LTD.) 19.05.2014 (2014-05-19) entire text, all drawings | 1-13 |
| A | WO 2019/013225 A1 (PANASONIC IP MANAGEMENT CO., LTD.) 17.01.2019 (2019-01-17) entire text, all drawings | 1-13 |

☐  Further documents are listed in the continuation of Box C.      ☒  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 January 2020 (23.01.2020) | 04 February 2020 (04.02.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

EP 3 926 427 A1

**INTERNATIONAL SEARCH REPORT**

Information on patent family members

International application No.

PCT/JP2020/000450

| Patent Documents referred in the Report | Publication Date | Patent Family | Publication Date |
|---|---|---|---|
| JP 2018-116545 A | 26 Jul. 2018 | US 2018/0203439 A1 in particular, paragraph [0143], claims 1-3, fig. 14 EP 3352032 A1 CN 108334890 A | |
| JP 2000-123085 A | 28 Apr. 2000 | (Family: none) | |
| JP 2014-92799 A | 19 May 2014 | (Family: none) | |
| WO 2019/013225 A1 | 17 Jan. 2019 | (Family: none) | |

Form PCT/ISA/210 (patent family annex) (January 2015)

**EP 3 926 427 A1**

**REFERENCES CITED IN THE DESCRIPTION**

**Patent documents cited in the description**

- JP 5129725 B